(19) Europäisches Patentamt
European Patent Office
Office européen des brevets

(11) EP 2 867 691 B1

(12) **FASCICULE DE BREVET EUROPEEN**

(45) Date de publication et mention de la délivrance du brevet:
**02.11.2016 Bulletin 2016/44**

(21) Numéro de dépôt: **12744027.9**

(22) Date de dépôt: **29.06.2012**

(51) Int Cl.:
***G01S 3/74*** *(2006.01)* ***H04B 7/08*** *(2006.01)*

(86) Numéro de dépôt international:
**PCT/FR2012/051507**

(87) Numéro de publication internationale:
**WO 2014/001651 (03.01.2014 Gazette 2014/01)**

(54) **DISPOSITIF ET PROCÉDÉ DE LOCALISATION D'UN ÉMETTEUR RFID**

VORRICHTUNG UND VERFAHREN ZUR ORTUNG EINES RFID-SENDERS

DEVICE AND METHOD FOR LOCATING AN RFID TRANSMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**06.05.2015 Bulletin 2015/19**

(73) Titulaire: **Blinksight**
**14460 Colombelles (FR)**

(72) Inventeurs:
- **MUTZ, Matthieu**
  **F-14000 Caen (FR)**
- **MUTZ, Stéphane**
  **F-14840 Cuverville (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**US-A1- 2006 244 660**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne un dispositif de localisation d'un émetteur distant.

Un domaine d'application de l'invention est la localisation d'objets, ou de personnes, portant un émetteur émettant un signal qui est détecté pour permettre de le localiser.

L'invention trouve son application dans les domaines nécessitant la mesure par une station de base de position connue de la direction dans laquelle se trouve un émetteur mobile de position inconnue.

Un exemple d'application de l'invention est la localisation d'objets et/ou de personnes dans un ou plusieurs bâtiments, pouvant être dans le domaine de la logistique, pour par exemple localiser des articles dans un entrepôt, un bâtiment, un magasin ou un immeuble ou autres. Cet exemple d'application peut nécessiter la localisation sur un plan (environnement 2D) ou dans l'espace (environnement 3D).

Les Systèmes de Localisation en Temps Réel (RTLS) sont un exemple d'un tel domaine d'application. Un tel système a pour objet de suivre en temps réel la position d'un grand nombre d'objets ou de personnes à l'intérieur d'un bâtiment. Ces systèmes utilisent les ondes radio pour localiser les émetteurs mobiles à l'aide d'un réseau de stations de base dont la position est prédéterminée.

L'émetteur est notamment un émetteur RFID, comme par exemple une étiquette RFID (en anglais « RFID tag »), RFID signifiant en français identification par radiofréquence (en anglais « radio frequency identification »).

Les systèmes RTLS utilisent des communications radio sans fil pour estimer la position relative de l'élément mobile par rapport à des stations de base situées en des points de référence dont la position est connue.

On connaît par le document US-A-2008/019 79 82 A1 un émetteur à étiquette RFID vers un récepteur ayant une antenne de réception. Le récepteur comporte un décodeur, qui estime la réponse impulsionnelle du canal de l'antenne, pour estimer la phase du signal reçu par l'antenne et décoder des données transmises par l'étiquette RFID, en éliminant les interférences dues aux trajets multiples dus aux réflexions sur les murs d'un bâtiment.

Le document US-A-2010/0309051 décrit un système pour estimer la position d'un appareil mobile, prévoyant de recevoir sur l'appareil mobile un signal à trajets multiples, pouvant être du type UWB, émis par des émetteurs, de calculer des premiers paramètres caractérisant le canal de communication en fonction des signaux reçus, d'extraire d'une base de données des deuxièmes paramètres correspondant à des localisations, et de comparer les premiers paramètres aux deuxièmes paramètres pour déterminer la position de l'appareil mobile.

Le document US-A-2010/0271 263 décrit un système pour estimer la position d'un appareil mobile, prévoyant de recevoir par plusieurs antennes sur l'appareil mobile un signal pouvant être du type UWB et RFID, émis par des émetteurs, une corrélation avec un préambule du signal émis étant utilisée pour calculer le temps de trajet du signal entre les émetteurs et l'appareil mobile.

Le document US-A-2011/0090813 décrit un récepteur à plusieurs antennes, calculant une direction d'arrivée d'une onde incidente en utilisant une corrélation avec un signal pilote contenu dans le signal reçu.

Le document US-B-7 474 219 décrit un système de localisation de personnes ou d'objets ayant des étiquettes radiofréquence, le système comportant des récepteurs pour recevoir le signal émis par l'étiquette et effectuer une inter-corrélation entre le signal reçu et un signal codé, pour déterminer la position de l'étiquette sur la base de l'angle d'arrivée calculé par chaque récepteur.

Le document US-B-6 760 387 décrit un système pour déterminer la position d'un émetteur, le système comportant un récepteur à deux antennes pour déterminer l'angle d'arrivée de signaux impulsionnels reçus sur les antennes, pouvant être du type UWB, en utilisant une inter-corrélation entre le signal reçu et un signal codé.

Le document EP-A-1 610 258 décrit un dispositif de localisation d'un émetteur RFID distant dans un environnement procurant une pluralité de trajets distincts de propagation d'un signal émis sans fil par l'émetteur, le dispositif comportant au moins un récepteur ayant au moins une première antenne de réception du signal émis et au moins une deuxième antenne de réception du signal émis, la première antenne et la deuxième antenne étant reliées à respectivement une première voie de réception fournissant un premier signal de réception en fonction du signal émis et une deuxième voie de réception fournissant un deuxième signal de réception en fonction du signal émis. Le dispositif connu par le document EP-A-1 610 258 permet de calculer la direction d'arrivée du signal émis par l'étiquette en affectant différents poids aux signaux reçus par les antennes.

Le document WO 00/25 147 décrit un récepteur à deux antennes calculant un angle d'arrivée d'une onde radio en utilisant une détection du front montant et des passages par zéro d'une porteuse de fréquence intermédiaire. Les inventeurs se sont aperçus de ce que le principe de détection mis en oeuvre par le document WO 00/25147 ne permet pas le fonctionnement dans des conditions de faible rapport signal sur bruit, car il nécessite une détection d'énergie dans le domaine analogique.

L'un des problèmes rencontrés lorsque le dispositif est mis en oeuvre dans un environnement comportant des parois ou plus généralement dans un environnement fermé par rapport à l'extérieur, encore appelé ici environnement intérieur, comme par exemple typiquement dans des bâtiments, est l'existence de réflexions parasites du signal émis sur les murs, les parois, les sols et les plafonds entre autres. Ces réflexions créent des trajets multiples du signal émis.

Ainsi, un récepteur muni d'une antenne devant recevoir le signal émis reçoit non seulement le trajet direct allant de l'émetteur à l'antenne, mais également des trajets indirects issus d'une ou de plusieurs réflexions du signal émis sur des éléments de l'environnement. Ces trajets multiples ont tendance à brouiller de manière défavorable la localisation de l'émetteur par un ou plusieurs récepteurs.

Certaines techniques connues de localisation utilisent ainsi les signaux à impulsions ultra large bande, aussi connus sous l'acronyme UWB (en anglais « Ultra Wide Band »), qui sont réputés avoir une meilleure robustesse aux interférences. Les transmissions radio de signaux UWB fonctionnent par l'émission d'impulsions électromagnétiques de très faible durée (de l'ordre d'une nanoseconde) séparées par des périodes de silence. Dans les approches en bande étroite, qui emploient des impulsions de plus longue durée ou même des signaux à porteuse continue, l'environnement de propagation en intérieur joue un rôle négatif considérable qui vient modifier les propriétés du signal reçu et qui rend une estimation fine du temps de propagation particulièrement difficile. Par rapport à des signaux en bande étroite, la très faible durée des impulsions UWB (typiquement 2 ns pour une largeur de bande de 500 MHz) apporte une résolution temporelle très fine.

Du fait de la courte durée des impulsions qu'ils contiennent, les signaux du type UWB occupent une large bande de fréquence, typiquement d'environ 500 MHz ou plus. Les autorités de régulation, telles que la FCC aux Etats-Unis, ont autorisé l'emploi de signaux UWB dans des gammes de fréquences allant de 3.1 à 10.6 GHz. La puissance d'émission des signaux UWB est limitée à une moyenne de -41.3 dBm/MHz.

Ainsi, également pour les signaux du type UWB, la très faible puissance d'émission, en comparaison des 20 dBm autorisés pour un signal du type « Wi-Fi », se traduit par des niveaux de rapport signal sur bruit très faibles à la réception. Les impulsions du signal UWB capté par une antenne située à une dizaine de mètres de l'émetteur sont généralement masquées par le bruit ambiant, ce qui rend leur détection particulièrement délicate.

Pour permettre une communication dans ces conditions, on a souvent recours à des récepteurs cohérents, qui intègrent l'énergie d'une multitude d'impulsions pour discerner ces dernières du bruit ambiant par accumulation d'une quantité plus importante d'énergie du signal.

Pour réaliser un système de localisation, on connait par l'état de l'art deux techniques très utilisées parmi d'autres : celle dite de trilatération et celle dite de triangulation. La mise en oeuvre d'un positionnement en trois dimensions sur la seule base d'un système de trilatération nécessite le positionnement de stations de base réceptrices à différentes hauteurs, y compris à proximité du sol où la probabilité d'obstruction du trajet direct est très importante. Un système de triangulation permet d'installer les stations de base exclusivement au plafond, ce qui accroit la probabilité d'un trajet direct dégagé entre l'émetteur et les stations de base.

La précision absolue d'un système de positionnement par triangulation repose exclusivement sur la capacité de mesurer avec précision un angle d'arrivée à chacun des points d'ancrage.

L'invention vise à obtenir un dispositif de localisation d'un émetteur distant dans un environnement procurant une pluralité de trajets distincts de propagation d'un signal émis sans fil par l'émetteur, qui pallie les inconvénients de l'état de la technique et qui soit d'une précision améliorée, y compris dans des conditions de faible rapport signal à bruit, tout en ayant une faible complexité de mise en oeuvre.

A cet effet, un premier objet de l'invention est un récepteur suivant la revendication 1.

Les revendications 2 à 14 concernent des modes de réalisation du récepteur suivant l'invention.

Un deuxième objet de l'invention est un dispositif de localisation d'un émetteur RFID (2) distant dans un environnement procurant une pluralité de trajets (TRi) distincts de propagation d'un signal émis (SE) sans fil par l'émetteur (2), le dispositif comportant au moins une troisième antenne (10C) située en une troisième position prédéterminée,
le dispositif comporte, comme récepteur (100), au moins un premier récepteur (100, M1) tel que décrit ci-dessus pour calculer une pluralité de premières différences d'argument ($\theta i_{21}$) pour respectivement la pluralité de trajets (TRi), et au moins un deuxième récepteur (100, M2) tel que décrit ci-dessus, dont les première et deuxième voies sont reliées respectivement à la première antenne (10A) et à la troisième antenne (10C) pour calculer une pluralité de deuxièmes différences d'argument ($\theta i_{31}$) pour respectivement la pluralité de trajets (TRi),
la première position de la première antenne (10A), la deuxième position de la deuxième antenne (10B) et la troisième position de la troisième antenne (10C) étant non alignées,
le module (30) de conversion convertissant la pluralité de premières différences d'argument ($\theta i_{21}$) et la pluralité de deuxièmes différences d'argument ($\theta i_{31}$) respectivement en une pluralité d'angles d'arrivée ($\alpha i$, $\varphi i$) de la pluralité de trajets (TRi) par rapport aux récepteurs (M1, M2).

Suivant un mode de réalisation de l'invention, le dispositif comporte en outre, comme récepteur (100), au moins un troisième récepteur (100, M3) tel que décrit ci-dessus, dont les première et deuxième voies sont reliées respectivement à la troisième antenne (10C) et à la deuxième antenne (10B) pour calculer une pluralité de troisièmes différences d'argument ($\theta i_{23}$) pour respectivement la pluralité de trajets (TRi),
le module (30) de conversion convertissant la pluralité de premières différences d'argument ($\theta i_{21}$), la pluralité de deuxièmes différences d'argument ($\theta i_{31}$) et la pluralité de troisièmes différences d'argument ($\theta i_{23}$) respectivement en une pluralité d'angles d'arrivée ($\alpha i$, $\varphi i$) de la pluralité de trajets (TRi) par rapport aux récepteurs (M1, M2).

Un troisième objet de l'invention est un procédé de localisation d'un émetteur RFID (2) distant dans un environnement procurant une pluralité de trajets (TRi) distincts de propagation d'un signal émis (SE) sans fil par l'émetteur (2), à l'aide d'au moins un récepteur tel que décrit ci-dessus, procédé dans lequel

on reçoit le signal émis (SE) sur au moins une première antenne (10A) de réception et au moins une deuxième antenne (10B) de réception du au moins un récepteur (100, M1, M2, M3), la première antenne (10A) et la deuxième antenne (10B) étant reliées dans le récepteur (100, M1, M2, M3) à respectivement une première voie (11A) de réception fournissant un premier signal de voie (yA) en fonction du signal émis (SE) et une deuxième voie (11B) de réception fournissant un deuxième signal de voie (yB) en fonction du signal émis (SE),

caractérisé en ce que

le signal (SE) émis sans fil par l'émetteur est du type ultra-large bande,

la première antenne (10A) définissant un premier canal (A) de réception du signal émis (SE) selon la pluralité de trajets (TRi),

la deuxième antenne (10B) définissant un deuxième canal (B) de réception du signal émis (SE) selon la pluralité de trajets (TRi),

la première antenne (10A) et la deuxième antenne (10B) étant distantes l'une de l'autre et ayant respectivement des première et deuxième positions prédéterminées l'une par rapport à l'autre, de telle sorte que le premier canal (A) de réception soit sensiblement identique au deuxième canal (B) de réception,

on estime par le récepteur (100, M1, M2, M3) la première réponse impulsionnelle (HA, hnA) du premier canal (A) ayant la pluralité de trajets (TRi) au signal émis (SE) en fonction du signal émis (SE) et du premier signal de voie (yA), on estime par le récepteur (100, M1, M2, M3) la deuxième réponse impulsionnelle (HB, hnB) du deuxième canal (B) ayant la pluralité de trajets (TRi) au signal émis (SE) en fonction du signal émis (SE) et du deuxième signal de voie (yB),

on extrait (161) de la première réponse impulsionnelle (HA) par le récepteur (100, M1, M2, M3) une pluralité de premières composantes (hiA) associées respectivement à la pluralité de trajets (TRi) arrivant à la première antenne (10A), et on extrait de la deuxième réponse impulsionnelle (HB) par le récepteur (100, M1, M2, M3) une pluralité de deuxièmes composantes (hiB) associées respectivement à la pluralité de trajets (TRi) arrivant à la deuxième antenne (10B),

on calcule par le récepteur (100, M1, M2, M3) une pluralité de différences (θi) d'argument entre l'argument (arg(hiA)) de chaque première composante (hiA) de la première réponse impulsionnelle (HA) et l'argument (arg(hiB)) de chaque deuxième composante (hnB) de la deuxième réponse impulsionnelle (HB) pour respectivement la pluralité de trajets (TRi),

on convertit par le récepteur (100, M1, M2, M3) la pluralité de différences (θi) d'argument en une pluralité d'angles d'arrivée (ANGi ; (αi, φi)) de la pluralité de trajets (TRi) par rapport au récepteur (100).

Suivant un mode de réalisation de l'invention, on détermine par le récepteur une localisation de l'émetteur (2) à partir de la pluralité d'angles d'arrivée (ANGi ; (αi, φi)) de la pluralité de trajets (TRi).

L'invention sera mieux comprise à la lecture de la description qui va suivre, donnée uniquement à titre d'exemple non limitatif en référence aux dessins annexés, sur lesquels :

- la figure 1 représente schématiquement un exemple de référentiel spatial pris par rapport à deux antennes du dispositif de localisation suivant l'invention dans un plan en deux dimensions,
- la figure 2 représente schématiquement un mode de réalisation d'un récepteur du dispositif de localisation suivant l'invention, ainsi qu'un émetteur,
- la figure 3 représente schématiquement un récepteur du dispositif de localisation dans un mode de réalisation suivant l'invention,
- la figure 4A représente schématiquement un exemple de la réponse impulsionnelle d'un canal du récepteur dans le cas d'une propagation dégagée entre l'émetteur et le récepteur du dispositif de localisation suivant l'invention,
- la figure 4B représente schématiquement un exemple de la réponse impulsionnelle d'un canal du récepteur dans le cas d'une propagation en présence d'un obstacle entre l'émetteur et le récepteur du dispositif de localisation suivant l'invention,
- la figure 4C est une représentation numérique schématique d'un exemple de la réponse impulsionnelle d'un canal du récepteur en ordonnée, en fonction du temps en abscisse, dans le cas d'une propagation dégagée entre l'émetteur et le récepteur du dispositif de localisation suivant l'invention,
- la figure 5 représente schématiquement des matrices utilisées dans le procédé de calcul mis en oeuvre dans le récepteur du dispositif de localisation suivant l'invention,
- la figure 6 représente schématiquement un synoptique modulaire d'un module de calcul du récepteur du dispositif de localisation suivant l'invention,
- la figure 7 représente schématiquement un système de coordonnées sphériques utilisé dans un autre mode de réalisation du dispositif de localisation suivant l'invention,
- la figure 8 représente schématiquement un autre mode de réalisation du dispositif de localisation suivant l'invention permettant une localisation en trois dimensions,
- la figure 9 représente schématiquement un exemple d'utilisation du dispositif de localisation suivant l'invention dans

une pièce,

- la figure 10 représente schématiquement un exemple de détermination de la direction d'émission du signal émis par l'émetteur par le dispositif de localisation suivant l'invention.

Aux figures, le dispositif 1 de localisation d'un émetteur RFID distant 2 comporte au moins un récepteur 100 ayant au moins une première antenne 10A de réception du signal SE émis et au moins une deuxième antenne 10B de réception du signal SE émis, le signal SE étant émis sans fil par l'émetteur RFID 2. L'émetteur RFID 2 est par exemple du type actif. L'émetteur RFID 2 comporte une ou plusieurs antennes 20 d'émission du signal SE vers le récepteur 100. L'émetteur RFID 2 consiste en ou comporte par exemple au moins une étiquette RFID. L'émetteur RFID 2 est apte à émettre le signal SE à une distance de plusieurs mètres. Le signal SE émis est du type ultra large bande UWB (en anglais « Ultra Wide Band »). Le signal SE émis est par exemple selon la norme IEEE802.15.4a. L'émetteur 2 est par exemple un émetteur mobile. L'émetteur 2 est par exemple fixé sur un objet ou porté par une personne. Le signal SE est un signal radio. Bien entendu, un objet ou une personne peut porter plusieurs émetteurs 2.

Le récepteur a par exemple une seule première antenne 10A et une seule deuxième antenne 10B à la figure 1. Dans un mode de réalisation, le signal SE émis a au moins une fréquence comprise dans la bande allant de 3 à 10.6 GHz.

Dans un mode de réalisation, le signal SE émis par l'émetteur 2 et reçu à chacune des antennes 10A et 10B du récepteur 100, consiste en une trame elle-même composée d'un préambule connu suivi d'une partie de données inconnues. Le préambule est lui-même composé d'un en-tête de synchronisation et d'un code identifiant de manière unique la fin de cet en-tête de synchronisation. L'en-tête de synchronisation est formé par la répétition périodique d'une séquence C déterministe d'impulsions distinctes séparées par des phases de silence. Notons s(t) le signal de l'en-tête de synchronisation, formé par une répétition périodique d'une séquence C = {$C_0$ ; $C_1$ ;... $C_{L-1}$ } de L impulsions élémentaires p(t) transmises avec la période $T_S = S.T_c$ secondes entre les impulsions successives p(t) de la séquence C, où L est un entier naturel non nul, mod L désigne l'opérateur modulo L (égal au reste de la division par L), $T_c$ est la durée de chaque impulsion p(t) et K est le nombre de répétitions de la séquence C.

$$s(t) = \sum_{k=0}^{K.L} C_{k \bmod L}\, p(t - kT_s); (\forall k) C_k \in \{-1; 0; 1\}$$

Dans un mode de réalisation de l'invention, la séquence C est individuelle et différente pour chaque émetteur 2, et donc pour chaque objet ou personne portant cet émetteur 2.

Dans un autre mode de réalisation de l'invention, la séquence C est identique pour chaque émetteur 2 ou pour un ensemble de plusieurs émetteurs 2, et donc pour plusieurs objets ou personnes portant chacun un émetteur 2.

Dans un mode de réalisation de l'invention, chaque impulsion a par exemple une durée $T_c$ de 2 ns et une période de silence de 30 ns sépare deux impulsions successives de l'en-tête de synchronisation, soit S=16. La forme de chaque impulsion est telle que par exemple le signal occupe une bande de fréquence de 500 MHz de large centrée autour de 8 GHz dans le domaine fréquentiel.

Le récepteur 100 comporte deux antennes séparées par une distance D petite devant la distance qui sépare l'émetteur mobile du dispositif de réception.

Le dispositif se trouve dans un environnement procurant une pluralité de trajets TRi distincts de propagation du signal émis SE sans fil par l'émetteur 2. Ces trajets sont dus au fait que le signal émis SE, en plus du trajet direct de l'émetteur 2 vers chaque antenne 10A et 10B, subit une ou plusieurs réflexions dans l'environnement, par un ou des élément(s) réfléchissant(s), formé(s) par exemple par des surfaces, des sols, des plafonds, des murs, des obstacles ou des parois et désigné(s) globalement par la référence REF pouvant être par exemple dans un bâtiment, un tel environnement étant par exemple un environnement intérieur. Par conséquent, le signal émis SE a, en plus du trajet direct TR0 de l'émetteur 2 vers chaque antenne 10A et 10B, un ou plusieurs trajets indirects distincts TR1, ..., TRN de l'émetteur 2 vers chaque antenne 10A et 10B. Ces trajets TR0, TR1, ..., TRN de propagation du signal émis SE sans fil par l'émetteur 2 sont désignés de manière globale par trajets TRi, pour i variant de 0 à N, où N est une entier naturel non nul.

La première antenne 10A et la deuxième antenne 10B sont reliées à respectivement une première voie 11A de réception fournissant un premier signal de de voie yA en fonction du signal émis SE et une deuxième voie 11B de réception fournissant un deuxième signal de voie yB en fonction du signal émis SE.

La première antenne 10A et la deuxième antenne 10B sont distantes l'une de l'autre et ont respectivement des première et deuxième positions prédéterminées l'une par rapport à l'autre.

Dans un mode de réalisation, la distance D qui sépare les deux antennes 10A et 10B du récepteur 100 est égale à une longueur d'onde de la fréquence centrale du signal émis SE par l'émetteur 2. Cette longueur d'onde $\lambda$ correspond à la fréquence centrale d'émission du signal émis SE de pulsation $\omega = \omega_{TX}$.

La première antenne 10A définit un premier canal A de réception du signal émis SE selon la pluralité de trajets

TRi. La deuxième antenne 10B définit un deuxième canal B de réception du signal émis SE selon la pluralité de trajets TRi.

Dans un mode de réalisation, chaque voie 11A, 11B implémente une architecture homodyne conventionnelle.

Dans ce qui suit, la notations désigne les nombres complexes.

Le dispositif comporte un premier convertisseur 12A, 13A du signal $s_A$ reçu par la première antenne 10A en le premier signal yA de voie en bande de base envoyé au premier module 14A d'estimation et un deuxième convertisseur 12B, 13B du signal $s_B$ reçu par la deuxième antenne 10B en le deuxième signal de voie yB en bande de base envoyé au deuxième module 14B d'estimation. Le signal radio reçu par chacune des antennes 10A et 10B est respectivement traité dans chaque voie de réception 11A et 11 B par un amplificateur faible bruit 12A et 12B (LNA), puis est transposé en bande de base à l'aide d'un mélangeur 13A et 13B. Le résultat de cette opération est, pour chaque voie 11A et 11B, un signal en bande de base complexe yA (également noté $\tilde{y}_A(t)$), respectivement yB (également noté $\tilde{y}_B(t)$). Les éléments 12A, 13A, 12B, 13B sont par exemple prévus dans le récepteur 100.

Dans un mode de réalisation, le récepteur 100 comporte un oscillateur local 101 fournissant un signal d'horloge aux mélangeurs 13A, 13B.

Dans un mode de réalisation, le récepteur 100 comporte un seul oscillateur local 101 partagé entre ces deux voies de réception 11 A et 11 B.

Le dispositif comporte en outre un premier module 14A d'estimation de la première réponse impulsionnelle HA de la pluralité de trajets TRi du premier canal A au signal émis SE en fonction du signal émis SE et du premier signal de voie yA, un deuxième module 14B d'estimation de la deuxième réponse impulsionnelle HB de la pluralité de trajets TRi du deuxième canal B au signal émis SE en fonction du signal émis SE et du deuxième signal de voie yB. Les éléments 14A, 14B sont par exemple prévus dans le récepteur 100.

Comme indiqué par la figure 2, les antennes 10A et 10B du récepteur reçoivent en fait plusieurs échos TRi du signal radio SE, produits par l'environnement. On exprime donc le signal reçu $s_A = s_A(t)$ et $s_B = s_B(t)$ par chaque antenne 10A et 10B comme :

$$\begin{cases} s_A(t) = \sum_{i=0}^{N} h_{A,i}.s(t-\tau_{A,i}).\cos\omega_{TX}(t-\tau_{A,i}) \\ s_B(t) = \sum_{i=0}^{N} h_{B,i}.s(t-\tau_{B,i}).\cos\omega_{TX}(t-\tau_{B,i}) \end{cases}$$

avec

$\tau_{A,i}$ et $\tau_{B,i}$ respectivement le délai d'arrivée du i-ème trajet TRi du signal émis SE à l'antenne 10A, respectivement à l'antenne 10B. Les coefficients $h_{A,i}$ et $h_{B,i}$ expriment l'atténuation affectant chacun des trajets TRi et sont les coefficients d'amplitude respectivement de la réponse impulsionnelle HA de la pluralité de trajets TRi du premier canal A et la réponse impulsionnelle HB de la pluralité de trajets TRi du deuxième canal B, pour i variant de 0 à N.

La première antenne 10A et la deuxième antenne 10B sont distantes l'une de l'autre et ont respectivement des première et deuxième positions prédéterminées l'une par rapport à l'autre, de telle sorte que le premier canal A de réception soit sensiblement identique au deuxième canal B de réception.

Du fait que les antennes 10A et 10B sont faiblement espacées par rapport à la distance qui sépare l'émetteur 2 ou les éléments réfléchissants REF du récepteur 100, le premier canal de propagation A de l'émetteur 2 à l'antenne 10A est supposé sensiblement identique au deuxième canal de propagation B de de l'émetteur 2 à l'antenne 10B. Seuls les temps d'arrivée $\tau_{A,i}$ et $\tau_{B,i}$ varient et l'on note :

$$\tau_{B,i} = \tau_{A,i} + (\Delta t)_i$$

où $(\Delta t)_i$ est un temps dépendant du trajet TRi et traduit la différence de temps d'arrivée du trajet TRi sur l'antenne 10B par rapport à l'antenne 10A. Les temps d'arrivée $\tau_{A,i}$ et $\tau_{B,i}$ correspondent au temps de vol associé au i-ème trajet TRi.

Du fait que le canal de propagation A de l'émetteur 2 à l'antenne 10A est considéré sensiblement identique au canal de propagation B de de l'émetteur 2 à l'antenne 10B, chaque trajet TRi de propagation du signal émis SE arrive avec sensiblement le même angle d'arrivée ANGi à la première antenne 10A et à la deuxième antenne 10B ainsi que représenté à la figure 1, les angles d'arrivée ANGi, ($\alpha$i, $\varphi$i) étant différents entre les trajets TRi, ainsi que cela est représenté à titre d'exemple à la figure 2 pour l'angle ANG0 d'arrivée du trajet TR0 différent de l'angle ANGN d'arrivée du trajet TRN. Par conséquent, ANGi $\neq$ ANGj pour i $\neq$ j.

Les angles ANGi d'arrivée des trajets TRi sont pris par rapport à un référentiel fixe prédéterminé par rapport au récepteur 100 et par rapport aux antennes 10A et 10B du récepteur 100, et par exemple dans un plan fixe contenant une direction x fixe par rapport aux antennes 10A et 10B, cette direction x pouvant passer par exemple par les antennes 10A et 10B à la figure 1.

On pose :

$$t_{A,i} = t - \tau_{A,i}$$

et

$$t_{B,i} = t - \tau_{B,i}$$

$$\begin{cases} \tilde{y}_A(t) = \sum_{i=0}^{N} h_{A,i} \cdot s(t_{A,i}) \cdot e^{j\theta_{A,i}} \cdot e^{j\Delta\omega t + j\varphi} \\ \tilde{y}_B(t) = \sum_{i=0}^{N} h_{B,i} \cdot s(t_{B,i}) \cdot e^{j\theta_{B,i}} \cdot e^{j\Delta\omega t + j\varphi} \end{cases}$$

Dans les équations ci-dessus, $\Delta\omega$ correspond à un désalignement entre la fréquence d'émission $\omega_{TX}$ de l'oscillateur de l'émetteur 2 et la fréquence de réception $\omega_{RX}$ de l'oscillateur 101 du récepteur 100. Dans ces équations, $\varphi$ correspond à un désalignement en phase entre l'oscillateur de l'émetteur 2 et l'oscillateur 101 du récepteur 100.

$$\omega_{RX} = \omega_{TX} + \Delta\omega$$

On remarque l'apparition de deux termes de phase $\theta_{A,i}$ et $\theta_{B,i}$ donnés par :

$$\theta_{A,i} = \omega_{TX} \cdot t_{A,i}$$

et

$$\theta_{B,i} = \omega_{TX} \cdot t_{B,i}$$

La différence de phase $\theta_{A,i}$ - $\theta_{B,i}$ observée à la réception d'un trajet TRi sur les antennes 10A et 10B est directement liée à la différence de temps d'arrivée $t_{A,i}$-$t_{B,i}$ aux antennes 10A et 10B, qui est égale à

$$\theta_{A,i} - \theta_{B,i} = \omega_{TX} \cdot (t_{A,i} - t_{B,i})$$

La forme de l'impulsion p(t) est supposée telle que, pour des antennes faiblement espacées, et donc pour des délais $(\Delta t)_i$ faibles, l'on puisse poser $t_i = t - \tau_i$ voisin de $t_{A,i}$ et de $t_{B,i}$ de telle sorte que :

$$s(t_{A,i}) \approx s(t_{B,i}) \approx s(t - \tau_i)$$

Dans un exemple de réalisation, les signaux complexes $\tilde{y}_A(t)$ et $\tilde{y}_B(t)$ présents à la sortie de chaque mélangeur 13A et 13B ont une bande passante de 250 MHz et l'espacement D = 3.75 cm est égal à une longueur d'onde de la fréquence centrale du signal SE émis autour de 8 GHz. Le décalage temporel entre les impulsions vues par les voies 11 A et 11 B est donc inférieur à 125 ps.

Dans ce qui suit, la notation ^ exprime l'incertitude introduite sur les différents termes. En effet, le récepteur 100 va devoir constituer une estimation des différents contributeurs à partir des signaux $\tilde{y}_A(\boldsymbol{t})$ et $\tilde{y}_B(\boldsymbol{t})$ présents à la sortie de chaque mélangeur 13A et 13B.

Dans un mode de réalisation, la première réponse impulsionnelle HA est estimée par le module 14A dans le domaine numérique et comporte dès lors une multiplicité de premières composantes hnA résultant d'un échantillonnage à temps discret de période T. Le premier module 14A d'estimation calcule la première réponse impulsionnelle HA sous la forme d'une première multiplicité d'échantillons hnA en temps discret.

Dans ce même mode de réalisation, la deuxième réponse impulsionnelle HB est estimée par le module 14B dans le domaine numérique et comporte dès lors une multiplicité de deuxièmes composantes hnB résultant d'un échantillonnage à temps discret de période T. Le deuxième 14B d'estimation calcule la deuxième réponse impulsionnelle HB sous la forme d'une deuxième multiplicité d'échantillons hnB en temps discret.

Les trajets TRi se trouvent représentés dans ce signal HA, HB numérique.

Dans un mode de réalisation, le dispositif comporte au moins un convertisseur $15A_{RE}$, $15A_{IM}$, $15B_{RE}$, $15B_{IM}$ analogique en numérique pour convertir le premier signal yA de voie en bande de base en le premier signal yA# de voie en bande de base numérique envoyé au premier module 14A d'estimation et pour convertir le deuxième signal de voie yB en bande de base respectivement en le deuxième signal de voie yB# en bande de base numérique envoyé au deuxième module 14B d'estimation. Chacune des deux composantes (composante en phase et composante en quadrature) des signaux en bande de base $\tilde{y}_A(t)$ et $\tilde{y}_B(t)$ est convertie d'analogique en numérique à l'aide de convertisseurs analogique en numérique (ADC) $15A_{RE}$, $15A_{IM}$, $15B_{RE}$, $15B_{IM}$. Les éléments $15A_{RE}$, $15A_{IM}$, $15B_{RE}$, $15B_{IM}$ sont par exemple prévus dans le récepteur 100.

La composante en phase $Re(\tilde{y}_A(t))$ du signal en bande de base $\tilde{y}_A(t)$ de la première voie 11A est convertie par un premier convertisseur analogique en numérique $15A_{RE}$ en une suite d'échantillons numériques $Re(\tilde{y}_{A,n})$ envoyée à une première entrée 14A1 du premier module 14A d'estimation.

La composante en quadrature $Im(\tilde{y}_A(t))$ du signal en bande de base $\tilde{y}_A(t)$ de la première voie 11A est convertie par un deuxième convertisseur analogique en numérique $15A_{IM}$ en une suite d'échantillons numériques $Im(\tilde{y}_{A,n})$ envoyée à une deuxième entrée 14A2 du premier module 14A d'estimation.

Le signal yA# est la suite des échantillons $y_{A,n}$.

La composante en phase $Re(\tilde{y}_B\ (t))$ du signal en bande de base $\tilde{y}_B(t)$ de la deuxième voie 11B est convertie par un troisième convertisseur analogique en numérique $15B_{RE}$ en une suite d'échantillons numériques $Re(\tilde{y}_{B,n})$ envoyée à une première entrée 14B1 du deuxième module 14B d'estimation.

La composante en quadrature $Im(\tilde{y}_B(t))$ du signal en bande de base $\tilde{y}_B(t)$ de la deuxième voie 11 B est convertie par un quatrième convertisseur analogique en numérique $15B_{IM}$ en une suite d'échantillons numériques $Im(\tilde{y}_{B,n})$ envoyée à une deuxième entrée 14B2 du deuxième module 14B d'estimation.

Le signal yB# est la suite des échantillons $y_{B,n}$.

Les quatre convertisseurs $15A_{RE}$, $15A_{IM}$, $15B_{RE}$, $15B_{IM}$ peuvent par exemple travailler de manière synchrone et fonctionner à une fréquence dérivée de l'oscillateur 101 partagé par le biais d'un diviseur 102 de fréquence et d'une ligne à retard 103.

Dans un mode de réalisation, le diviseur 102 de fréquence fonctionne par exemple avec un rapport de division par 16 à partir de l'oscillateur 101 à 8 GHz, soit une fréquence de fonctionnement des convertisseurs $15A_{RE}$, $15A_{IM}$, $15B_{RE}$, $15B_{IM}$ de 500 MHz.

Dans ce qui suit, $y_{A,n} = \tilde{y}_{A,n}$ désigne le signal numérique complexe de la première voie 11A en bande de base, dont la partie réelle est le signal numérique $Re(\tilde{y}_{A,n})$ de la première entrée 14A1 du premier module 14A et dont la partie imaginaire est le signal numérique $Im(\tilde{y}_{A,n})$ de la deuxième entrée 14A2 du premier module 14A.

Le signal $y_{B,n} = \tilde{y}_{B,m}$ désigne le signal numérique complexe de la deuxième voie 11B en bande de base, dont la partie réelle est le signal numérique $Re(\tilde{y}_{B,n})$ de la première entrée 14B1 du deuxième module 14B et dont la partie imaginaire est le signal numérique $Im(\tilde{y}_{B,n})$ envoyé à une deuxième entrée 14B2 du deuxième module 14B.

On formule alors le problème d'estimation sous la forme :

$$\begin{cases} \tilde{y}_{A,n} = \tilde{y}_A(nT) = \sum_{i=0}^{N} \widehat{h_{A,i}} . \hat{s}(nT - \hat{\tau}_i) . e^{j\widehat{\theta_{A,i}}} . e^{j\widehat{\Delta\omega} nT + j\hat{\varphi}} \\ \tilde{y}_{B,n} = \tilde{y}_B(nT) = \sum_{i=0}^{N} \widehat{h_{B,i}} . \hat{s}(nT - \hat{\tau}_i) . e^{j\widehat{\theta_{B,i}}} . e^{j\widehat{\Delta\omega} nT + j\hat{\varphi}} \end{cases}$$

On observe une succession de M échantillons de $y_{A,n}$ et $y_{B,n}$, de telle sorte que $M.T \geq \tau_N$ en supposant les $\tau_i$ supérieurs ou égaux à zéro et croissant de $\tau_0$ à $\tau_N$ ou aussi

$$M.T \geq \max(\tau_i).$$

On suppose également que la période d'échantillonnage T est telle que la condition de Shannon est satisfaite, aboutissant ainsi à une discrétisation sans perte du signal à temps continu $\widetilde{y_A}(t)$, respectivement $\widetilde{y_B}(t)$, en le signal à temps discret $y_{A,n}$ et respectivement $y_{B,n}$.

On suppose de plus que l'environnement est tel que les trajets de propagation TRi et TRj, pour i différent de j, sont distincts d'au moins une période T de sorte à ce que l'on puisse discriminer ces trajets TRi et TRj dans le domaine discret, ainsi que cela est représenté à titre d'exemple illustratif à la figure 4C représentant les trajets en fonction de l'indice n discret d'échantillonnage en abscisse.

On a donc, quel que soit i différent de j, pour les trajets TRi et TRj, ayant respectivement les temps d'arrivée différents $\tau_i$ et $\tau_j$ :

$$|\tau_j - \tau_i| > T$$

On note que les imperfections liées à la conversion analogique / numérique contribuent à une erreur sur l'estimation en amplitude de $\widetilde{h_i}$ et $\hat{s}(nT)$, et en phase de $\widetilde{\theta_{i,j}}$.

Dans une réalisation apte à fonctionner par intégration cohérente, le récepteur est synchronisé de sorte à compenser un décalage de fréquence et de phase avec l'émetteur. Ces sujets sont couverts de manière importante dans l'état de l'art et l'homme du métier n'aura aucun mal à mettre en oeuvre ces techniques. La synchronisation peut, par exemple, être obtenue à l'aide d'un oscillateur contrôlé numériquement (DCO) 101 et d'une ligne 103 à retard à commande numérique, tous deux contrôlés depuis le domaine numérique par un module 19 de synchronisation. Le module 19 de synchronisation assure une synchronisation en temps et en fréquence de l'oscillateur 101, des convertisseurs 12A, 13A, 12B, 13B en bande de base et des convertisseurs $15A_{RE}$, $15A_{IM}$, $15B_{RE}$, $15B_{IM}$ d'analogique en numérique. Les éléments 101, 102, 103 et 19 sont par exemple prévus dans le récepteur 100.

Une fois la synchronisation en fréquence et en temps obtenue, le récepteur est en mesure d'effectuer des intégrations cohérentes de plusieurs impulsions individuelles et d'améliorer ainsi le rapport signal à bruit en réception. On considère donc les termes $\Delta\omega$ et $\varphi$ annulés dans ce qui suit.

L'étape suivante consiste à calculer l'estimation de la réponse impulsionnelle $HA = \widetilde{\widehat{H_{A,n}}}$ du premier canal A de propagation et l'estimation de la réponse impulsionnelle $HB = \widetilde{\widehat{H_{B,n}}}$ du deuxième canal B de propagation. Cette estimation est réalisée pour chacune des deux voies 11 A et 11B respectivement à partir des premier et deuxième signaux de voie en bande de base numériques yA# et yB#, donc dans l'espace complexe.

On pose :

$$\widetilde{\widehat{H_{A,n}}} = \sum_{i=0}^{N} \widetilde{h_{A,i}} . e^{j\widetilde{\theta_{A,i}}} . \delta(nT - \widetilde{\tau_{A,i}})$$

$$\widetilde{\widehat{H_{B,n}}} = \sum_{i=0}^{N} \widetilde{h_{B,i}} . e^{j\widetilde{\theta_{B,i}}} . \delta(nT - \widetilde{\tau_{B,i}})$$

La figure 4A présente en fonction du temps en abscisse une illustration du module de la réponse impulsionnelle HA ou HB dans le cas d'une propagation en présence d'un ou plusieurs éléments réfléchissants REF et dans le cas d'une propagation dégagée entre l'émetteur 2 et le récepteur 100. La figure 4B présente en fonction du temps en abscisse une illustration du module de la réponse impulsionnelle HA ou HB dans le cas d'une propagation en présence d'un ou plusieurs éléments réfléchissants REF et dans le cas d'une propagation non dégagée entre l'émetteur 2 et le récepteur 100. On observe aux figures 4A et 4B qu'en plus du trajet direct TR0, plus atténué dans le cas de la figure 4B que de la figure 4A, d'autres trajets de propagation TR1, ..., TRN arrivant plus tard que le trajet TR0 existent, par exemple en raison de réflexions sur les murs, le sol ou le plafond.

La figure 4C montre que les instants n d'échantillonnage de HA sont plus fins (chaque n est écarté de son voisin d'une période T d'échantillonnage) que les écarts temporels entre les temps d'arrivée $\tau_0$, $\tau_1$, $\tau_2$ des trajets respectifs TR0, TR1, TR2, avec en ordonnées le module de HA. Il en est de même pour HB. Ainsi, les réponses impulsionnelles HA et HB englobent les échantillons hiA, hiB correspondant aux trajets TRi.

L'information de phase portée par chacun des échantillons complexes $\tilde{y}_{A,n}$, $\tilde{y}_{B,n}$ des voies A et B est également accumulée lors du processus d'intégration cohérente qui permet la construction de la représentation de la réponse impulsionnelle HA, HB du canal A, B.

Dans un mode de réalisation, le module 14A d'estimation calcule les échantillons $\mathrm{hnA} = \widehat{\widetilde{H}}_{A,n}$ de la première estimation de réponse impulsionnelle HA du premier canal A en effectuant une corrélation entre le premier signal de voie numérique yA# $=\tilde{y}_{A,n}$ et un signal CCAL calculé par permutations circulaires de la séquence C. Le module 14B d'estimation calcule les échantillons $\mathrm{hnB} = \widehat{\widetilde{H}}_{B,n}$ de la deuxième estimation de réponse impulsionnelle HB du deuxième canal B en effectuant une corrélation entre le deuxième signal de voie numérique yB#$=\tilde{y}_{B,n}$ et le signal CCAL calculé par permutations circulaires de la séquence C. La séquence C est contenue dans le signal émis SE (par exemple séquence C étant la séquence C d'impulsions présente dans l'en-tête de synchronisation du préambule du signal émis SE). Par exemple, cette séquence C est préenregistrée dans le récepteur. Pour ce faire, cette séquence C est mémorisée à l'avance ou programmée à l'avance dans le récepteur 100. Par exemple, ladite séquence C contenue dans le signal émis SE est préenregistrée dans le premier module 14A d'estimation et dans le deuxième module 14B d'estimation ou dans une autre mémoire du récepteur 100. Ces calculs sont effectués par exemple par intégration cohérente, en accumulant les résultats de corrélations entre les échantillons d'un flux de réception et des permutations circulaires de la séquence utilisée pour construire l'en-tête de synchronisation. Le résultat est un vecteur dont la dimension est le nombre d'échantillons de la séquence de préambule, et dont chaque composante porte un résultat d'accumulation complexe. L'accumulation peut durer sur plusieurs répétitions K de la séquence de préambule.

$$\widehat{\widetilde{H}}_{A,n} = \sum_{k=0}^{K-1} \sum_{m=0}^{L-1} \tilde{y}_{A,(n\,mod\,S)+m.S+k.L.S} \cdot C_{\left(L+m-\left\lceil \frac{n}{S} \right\rceil\right) mod\,L}$$

$$\widehat{\widetilde{H}}_{B,n} = \sum_{k=0}^{K-1} \sum_{m=0}^{L-1} \tilde{y}_{B,(n\,mod\,S)+m.S+k.L.S} \cdot C_{\left(L+m-\left\lceil \frac{n}{S} \right\rceil\right) mod\,L}$$

Dans ces équations, $\left\lceil \frac{n}{S} \right\rceil$ désigne la partie entière de n/S, arrondie à l'entier supérieur. K, L, S sont des entiers naturels prescrits et/ou préenregistrés dans les modules 14A et 14B.

On peut réaliser cette opération à l'aide d'un produit matriciel.

$$[\widetilde{H_A}] = [\tilde{Y}_A].[CCAL]$$

$$[\widetilde{H_B}] = [\tilde{Y}_B].[CCAL]$$

$[\widetilde{\widehat{H}_A}]$ une matrice complexe de dimension S x L dont les colonnes sont formées des échantillons $\widetilde{\widehat{H}_{A,n}}$ , $[\tilde{Y}_A]$ est une matrice complexe de dimension S x L dont les colonnes sont formées par les échantillons $\tilde{y}_{A,n}$,

[CCAL] est une matrice réelle de dimension L x L dont les colonnes sont formées par les permutations circulaires de la séquence C ,

$[\widetilde{\widehat{H}_B}]$ est une matrice complexe de dimension S x L dont les colonnes sont formées des échantillons $\widetilde{\widehat{H}_{B,n}}$ ,

$[\tilde{Y}_B]$ est une matrice complexe de dimension S x L dont les colonnes sont formées par les échantillons $\tilde{y}_{B,n}$.

La figure 5 illustre ce procédé de calcul dans le cas d'un exemple, où K = 1, L = 16 et S = 31. Dans cet exemple, chaque réponse impulsionnelle a 496 composantes.

Dans une implémentation pratique, il est seulement nécessaire de conserver L x S résultats intermédiaires et de traiter les opérations de multiplication matricielle au fur et à mesure de l'arrivée des échantillons $\tilde{y}_{A,n}$ et $\tilde{y}_{B,n}$.

La figure 6 présente un mode de réalisation d'une partie 140 présente dans les modules 14A et 14B d'estimation permettant de réaliser cette opération. Cette partie 140 est décrite pour le module 14A et peut être bien entendu la même dans le module 14B, en remplaçant les variables de la première voie 11A par les variables de la deuxième voie 11 B.

Cette partie 140 comporte une zone 141 de stockage, qui est initialisée à 0. Un compteur 142 d'index est incrémenté à l'arrivée de chacun des échantillons de signal $\tilde{y}_{A,n}$ à partir de 1 jusqu'à atteindre la valeur finale K x L x S. Un bloc logique 143 fournit les valeurs du signal CCAL (calculé par permutations circulaires de la séquence C, c'est-à-dire l'ensemble des coefficients $C_i$ du signal CCAL), permettant de mettre à jour les valeurs $\widetilde{\widehat{H}_{A,n}}$ affectées par la donnée $\tilde{y}_{A,n}$ appliquée sur une première entrée 144 de multiplieurs 146, dont la deuxième entrée 145 reçoit les valeurs du signal CCAL. Une seule donnée $\tilde{y}_{A,n}$ peut provoquer la mise à jour de L valeurs $\widetilde{\widehat{H}_{A,n}}$. Les produits intermédiaires $C_i{\cdot}\tilde{y}_{A,n}$ obtenus sur la sortie des multiplieurs 146 sont accumulés sur les valeurs $\widetilde{\widehat{H}_{A,n}}$ maintenues par la zone 141 de stockage. Les produits intermédiaires $C_i{\cdot}\tilde{y}_{A,n}$ obtenus sur la sortie des multiplieurs 146 (produit de la première entrée 144 par la deuxième entrée 145) sont envoyés à la première entrée 148 d'additionneurs 147, dont la deuxième entrée 149 reçoit les valeurs $\widetilde{\widehat{H}_{A,n}}$ maintenues par la zone 141 de stockage. La sortie 150 des additionneurs 147, égale à l'addition des entrées 148 et 149, est renvoyée à la zone 141 de stockage pour mettre à jour les valeurs $\widetilde{\widehat{H}_{A,n}}$ par cette sortie 150. Après l'arrivée de $\tilde{y}_{A,L,S}$, c'est-à-dire dans l'exemple ci-dessus de $\tilde{y}_{A,496}$, le processus peut se poursuivre en remplaçant $\tilde{y}_{A,n+LS}$ dans l'exemple ci-dessus) par $\tilde{y}_{A,n}$ dans l'explication ci-dessus. A l'issue de l'accumulation de K x L x S échantillons, une estimation de la réponse impulsionnelle HA, HB du canal A, B se trouve dans la zone 141 de stockage.

La réponse impulsionnelle HA, HB du canal A, B peut également être estimée par d'autres moyens.

Le dispositif comporte un module 161 d'extraction pour extraire de la première réponse impulsionnelle HA, hnA une pluralité de premières composantes hiA associées respectivement à la pluralité de trajets TRi arrivant à la première antenne 10A, et pour extraire de la deuxième réponse impulsionnelle HB, hnB une pluralité de deuxièmes composantes hiB associées respectivement à la pluralité de trajets TRi arrivant à la deuxième antenne 10B. Le module 161 comporte une première entrée 16A de réception de l'estimation de la première réponse impulsionnelle HA calculée par le module 14A et une deuxième entrée 16B de réception de l'estimation de la première réponse impulsionnelle HB calculée par le module 14B. Le module 161 est par exemple prévu dans le récepteur 100.

Dans un mode de réalisation, le module 161 d'extraction extrait de la multiplicité de premières composantes ou échantillons hnA la pluralité des premières composantes hnA qui correspondent à la pluralité de trajets TRi et qui sont donc appelées hiA. Le module 161 d'extraction extrait de la multiplicité de deuxièmes composantes ou échantillons hnB la pluralité des deuxièmes composantes hnB qui correspondent à la pluralité de trajets TRi et qui sont donc appelées hiB.

Par exemple, pour ce faire, le module 161 élimine les composantes hnA nulles ou sensiblement nulles. Par exemple, pour ce faire, le module 161 sélectionne parmi les premières composantes hnA les premières composantes hiA dont le module dépasse un certain seuil prédéterminé. Ce seuil est fixé à l'avance, est positif ou nul et est par exemple un seuil de bruit, pour éliminer les composantes hnA qui sont trop faibles, qui ne correspondent pas à un trajet TRi mais correspondent à du bruit. On voit en effet dans l'exemple illustratif de la figure 4C, que la première réponse impulsionnelle HA a des premières composantes hnA de module non nul pour h3A, h11A et h17A (soit pour n=3, 11,

17) associées aux trajets TR0, TR1, TR2, alors que les premières composantes hnA pour h0A, h1A, h5A, h10A h12A, h15A, h18A (soit pour n=0, 1, 5, 10, 12, 15, 18) sont de module nul ; dans cet exemple, le module 161 élimine h0A, h1A, h5A, h10A, h12A, h15A, h18A et sélectionne h3A, h11A et h17A comme étant associés aux trajets TR0, TR1, TR2.

Par exemple, de la même manière, le module 161 élimine les composantes hnB nulles ou sensiblement nulles. Par exemple, pour ce faire, le module 161 sélectionne parmi les deuxièmes composantes hnB les deuxièmes composantes hiB dont le module dépasse un certain seuil prédéterminé. Ce seuil est fixé à l'avance, est positif ou nul et est par exemple un seuil de bruit, pour éliminer les composantes hnB qui sont trop faibles, qui ne correspondent pas à un trajet TRi mais correspondent à du bruit.

On peut également appliquer le seuil à une combinaison linéaire des modules des premières composantes hnA et hnB, pour extraire les composantes hiA et hiB dépassant ce seuil selon le processus indiqué ci-dessus.

Le dispositif comporte en outre un module 162 de calcul d'une pluralité de différences θi = arg(hiA) - arg(hiB) d'argument entre l'argument arg(hiA) de chaque première composante hiA extraite par le module 161 de l'estimation de la première réponse impulsionnelle HA et l'argument arg(hiB) de chaque deuxième composante hiB extraite par le module 161 de l'estimation de la deuxième réponse impulsionnelle HB, ces différences θi d'argument étant associées respectivement à la pluralité de trajets TRi pour i allant de 0 à N.

θi est une estimation de la différence de phase observée entre les antennes 10A et 10B à la réception du train d'impulsions correspondant à un écho retardé de nT secondes.

$$\arg(\mathrm{hnA}) = \arg \tilde{\tilde{H}}_{A,n}$$

$$\arg(\mathrm{hnB}) = \arg \tilde{\tilde{H}}_{B,n}$$

$$\theta i = \arg(\mathrm{hiA}) - \arg(\mathrm{hiB})$$

Le dispositif comporte en outre un module 17 de conversion de la pluralité de différences θi = arg(hiA) - arg(hiB) d'argument en une pluralité de composantes d'angles d'arrivée ANGi, permettant d'identifier l'angle d'incidence de la pluralité de trajets TRi par rapport au récepteur 100. Le module 17 est par exemple prévu dans le récepteur 100.

Les angles d'arrivée ANGi sont par exemple dans un plan prédéterminé en deux dimensions fixé arbitrairement par rapport au récepteur. L'émetteur 2 est supposé appartenir à ce même plan.

Dans un mode de réalisation, à partir de la pluralité des différences d'argument θi, et donc pour chaque trajet TRi donné dans le canal de propagation, on obtient une estimation de l'angle d'arrivée ANGi par la relation suivante :

$$\mathrm{ANGi} = \cos^{-1}((c.\ \theta i)/(\omega.D))$$

avec $\omega = \omega_{RX} = \omega_{TX}$ = pulsation à la fréquence d'émission du signal émis SE de l'émetteur 2,
D = distance d'écartement entre la première antenne 10A et la deuxième antenne 10 B,
c = vitesse de la lumière,
$\cos^{-1}$ est la fonction arccos.

L'angle d'arrivée ANGi est un angle dans un plan en deux dimensions, par exemple selon la figure 1.

On obtient donc respectivement les angles d'arrivée ANG0, ANG1, ..., ANGN respectivement pour les trajets TR0, TR1, ..., TRN par rapport au récepteur.

Dans un mode de réalisation, cette fonction de calcul de ANGi en fonction de θi est implémentée sous la forme d'un processus de conversion phase / angle qui peut être implémenté à l'aide d'un algorithme CORDIC. Ce traitement du module 17 peut être intégré dans le récepteur ou être déporté dans une unité de traitement externe qui combine les différences θi de un ou plusieurs récepteurs 100, par exemple dans le but d'affiner l'estimation d'angle.

Un module 18 est prévu pour déterminer une localisation probable P de l'émetteur RFID 2 à partir de la pluralité d'angles d'arrivée ANGi (c'est-à-dire les angles d'arrivée ANG0, ANG1, ..., ANGN) de respectivement la pluralité de trajets TRi (c'est-à-dire les trajets TR0, TR1, ..., TRN). La localisation se fait au moins dans un plan prédéterminé en deux dimensions ou peut se faire en trois dimensions.

Par exemple, ce module 18 effectue une triangulation en utilisant les angles ANGi, c'est-à-dire ANG0, ANG1, ..., ANGN respectivement pour les trajets TRi, c'est-à-dire TR0, TR1, ..., TRN par rapport au récepteur 100, pour, en fonction des coordonnées des éléments REF de l'environnement procurant ces trajets, obtenir par triangulation les coordonnées d'un point P où se trouve probablement l'émetteur 2. On obtient ainsi la position de l'émetteur 2. Par exemple, pour ce

faire, les coordonnées des éléments réfléchissants REF de l'environnement procurant ces trajets, ainsi que la position et l'orientation des antennes 10A et 10B du récepteur 100 sont préenregistrées dans le module 18 pour calculer les coordonnées d'un point P où se trouve probablement l'émetteur 2. Le module 18 est par exemple prévu dans le récepteur 100.

De par la très faible durée des impulsions UWB, il est possible pour un récepteur de traiter chaque impulsion de manière isolée, et donc de discerner les différents trajets de propagation dans l'environnement. Ceci permet par exemple d'identifier le trajet le plus court, qui donne les meilleurs résultats dans l'estimation de la distance relative, ou de combiner l'analyse de multiples réflexions sur les éléments REF de l'environnement (murs, plafond, sol), pour obtenir des informations plus complètes sur l'environnement.

On présente ci-dessous un exemple d'estimation d'une position P par le module 18 à partir d'angles d'incidence multiples mesurés par un ou des récepteurs. Bien entendu, d'autres algorithmes sont envisageables.

<u>Cas d'un récepteur unique :</u>

On présente ici le cas de la résolution de localisation dans un plan à partir d'un dispositif de réception 100 capable de fournir une estimation des angles ANGi d'incidence associés aux trajets TRi pour i = 0, ..., N. Le récepteur 100 est positionné de sorte à ce que les antennes 10A et 10B appartiennent à un plan horizontal.

Dans l'exemple de la figure 9, l'environnement comporte comme éléments réfléchissants REF, des premier, deuxième, troisième et quatrième murs REF1, REF2, REF3, REF4 s'étendant dans quatre plans différents, par exemple formant en vue de dessus un rectangle. Si l'on s'intéresse uniquement aux réflexions primaires du signal émis SE sur les quatre murs REF1, REF2, REF3, REF4, on observe au niveau du récepteur 100 cinq trajets TR0 (trajet direct), TR1 (réflexion sur le mur REF1), TR2 (réflexion sur le mur REF2), TR3 (réflexion sur le mur REF3) et TR4 (réflexion sur le mur REF4). On peut généraliser ceci à des réflexions successives sur plusieurs murs. Le récepteur détermine donc 5 angles d'incidence identifiant la direction d'arrivée de chacun des 5 trajets. On peut bien évidemment généraliser à des cas plus complexes de pièces non rectangulaires et à des bâtiments composés de plusieurs pièces non-nécessairement rectangulaires.

On procède alors par tracé inverse, à partir du récepteur 100, de droites -ou de cônes si on dispose d'une estimation de l'erreur d'estimation des angles ANGi, $\alpha$i, $\varphi$i. Comme on suppose la position des murs REF1, REF2, REF3, REF4 fixe et connue par le récepteur 100, par exemple sous forme d'une saisie au format informatique du plan du bâtiment, on reconstitue le phénomène de réflexion de la manière suivante, représentée à la figure 10.

A la figure 10, pour chaque trajet TRi indirect reçu par le récepteur représenté par 100, on calcule la deuxième droite inverse INVTRi obtenue par réflexion inverse vers le mur REF croisant cette première droite TRi au point d'intersection INTi situé sur le mur REF. Ainsi, pour une première droite TRi d'équation y=a.x+b, cette deuxième droite INVTRi est d'équation y=-a.x+c en prenant un axe x parallèle au mur REF et un axe y perpendiculaire au mur REF.

Dans un mode de réalisation, on calcule une position probable P comme étant au point d'intersection des deuxièmes droites INVTRi et du trajet direct TR0, ou à l'intersection d'une ou plusieurs deuxièmes droites INVTRi et du trajet direct TR0, ou à l'intersection de plusieurs ou toutes les deuxièmes droites INVTRi.

Ce calcul d'intersection peut également être précisé ou corroboré par ce qui suit.

On connait, en plus de l'estimation des angles ANGi ou ($\alpha$i, ($\varphi$i) une estimation à $\pm T/2$ de l'instant d'arrivée $\tau$i - $\tau_0$ (pour i > 0) des trajets indirects TR1, TR2, TR3, TR4 par rapport au trajet direct TR0. On a donc une estimation de la différence de distance parcourue par le signal radio suivant les différents trajets de propagation identifiés.

On sait également estimer un affaiblissement théorique maximum rendant un signal indétectable par le récepteur (signal reçu à l'antenne d'une puissance inférieure au seuil de sensibilité du récepteur). Ce dernier paramètre donne donc une borne supérieure à la distance qu'a pu parcourir un signal radio pour être détecté par le récepteur. Notons $d_{max}$ cette distance.

On effectue donc un tracé en sens inverse INVTRi à partir de la position connue du récepteur 100 suivant la méthode exposée ci-dessus.

Lors de l'intersection d'une demi-droite INVTRi avec un mur, on s'intéresse uniquement au segment TRi compris entre le récepteur 100 et le point d'intersection INTi avec le mur REF, puis au segment formé par la demi-droite INVTRi matérialisant la direction d'arrivée probable de la source de la réflexion tel qu'exposé précédemment.

Dans un autre mode de réalisation, on pourrait s'intéresser à des réflexions successives du signal sur plusieurs murs, auquel cas on répète le processus à chaque nouvelle intersection avec un mur. Ce processus est interrompu lorsque la somme des longueurs des segments ainsi formés est supérieure ou égale à la limite $d_{max}$.

Dans cette représentation, un trajet TRi est représenté comme la succession de segments de droite empruntés lors de l'étape précédente de tracé inverse. Une position Pi(d) possible de l'émetteur 2 peut alors être attribuée pour une distance d parcourue par les ondes radio suivant chaque trajet TRi.

On connait une estimation $\widehat{d_i}$ de la différence de distance supplémentaire parcourue le long des trajets indirects TRi (i > 0) par rapport au trajet direct TR0. On détermine alors la distance $\hat{d}$ parcourue la plus probable (reliée au temps de propagation t par la relation d = c.t) qui minimise la relation :

$$\hat{d} = \arg\min \sum_{i \neq j} dist(P_i(d + \widehat{d_i}); P_j(d + \widehat{d_j}))$$

On peut alors déterminer la position estimée P de l'émetteur RFID 2 comme étant par exemple le barycentre des positions $P_i(d + \widehat{d_i})$.

On peut enrichir la qualité de l'estimateur de d par la connaissance de l'atténuation $a_i$ subie suivant les différents trajets de propagation TRi, par exemple en affectant une pondération proportionnelle à $a_i$ à la position $P_i(d + \widehat{d_i})$.

Cas de plusieurs récepteurs :

On peut généraliser ce qui précède à une mesure conjointe de U x N angles d'incidences $ANG_0^u$ à $ANG_{N-1}^u$ correspondant respectivement à N trajets $TR_0^u$ à $TR_{N-1}^u$ vus par U récepteurs 100 ($u \in \{0; 1; ...; U - 1\}$ avec U entier naturel supérieur à 1).

On réalise pour chacun des U récepteurs 100 le processus de tracé inverse tel que défini précédemment. Par généralisation de ce qui précède, on obtient un ensemble de U x N équations permettant d'associer une position possible $P_i^u(d + \widehat{d_i^u})$ à un temps de propagation commun t = d / c.

Dans une première généralisation, qui suppose que les U récepteurs 100 n'échangent pas d'information de temps d'arrivée $\tau_0^u$ du trajet $TR_0^u$, on peut s'attacher à minimiser le critère :

$$\hat{d} = \arg\min \sum_{u=0}^{U-1} \sum_{i \neq j} dist(P_i^u(d + \widehat{d_i^u}); P_j^u(d + \widehat{d_j^u}))$$

La position de l'émetteur 2 est alors déterminée à partir de $\hat{d}$, par exemple comme étant le barycentre des $P_i^u(\hat{d} + \widehat{d_i^u})$ ou d'un sous-ensemble de ces points.

La connaissance dans le processus de localisation des instants d'arrivée $\tau_0^u$ à chacun des U récepteurs 100, ou de la différence de temps d'arrivée entre chaque paire de récepteur, permet de procéder à une seconde généralisation :

$$\hat{d} = \arg\min \sum_{\substack{(u,i) \neq (v,j) \\ u,v \in \{0;...;U-1\} \\ i,j \in \{0;...;N-1\}}} dist(P_i^u(d + \widehat{d_i^u}); P_j^v(d + \widehat{d_j^v}))$$

Ici encore, on peut alors proposer une estimation de la position probable de l'émetteur 2 comme étant le barycentre des $P_i^u(d + \widehat{d_i^u})$ ou d'un sous ensemble de ces points, ou par toute autre méthode.

Le module 18 est par exemple prévu dans le récepteur 100. Dans un mode de réalisation, le récepteur 100 comporte l'ensemble des éléments représentés à la figure 3.

Dans un autre mode de réalisation, le module 18 est situé à l'extérieur du récepteur 100 et peut être partagé entre plusieurs récepteurs 100.

Dans un mode de réalisation, les antennes 10A et 10B ont des première et deuxième positions, qui sont prédéterminées et connues par rapport au récepteur 100 et par rapport à un boîtier 111 associé au récepteur 100. Les

orientations des antennes 10A et 10B sont également prédéterminées et connues par rapport au récepteur 100 et par rapport au boîtier 111 associé au récepteur 100.

Dans un mode de réalisation, on intégrera l'ensemble du récepteur 100 sous la forme d'un circuit intégré sur une même puce de silicium.

Dans un mode de réalisation, la disposition physique des canaux 11A et 11B est faite de manière symétrique par rapport à l'oscillateur 101 placé sur l'axe de symétrie. Cette structure permet de minimiser les différences en terme de délai de distribution d'horloge à destination des deux mélangeurs 13A et 13B et donc de limiter une source d'erreur systématique dans l'estimation de la différence θi.

Dans un mode de réalisation, la disposition physique des convertisseurs $15A_{RE}$, $15A_{IM}$, $15B_{RE}$, $15B_{IM}$ analogique en numérique est faite de manière symétrique par rapport à l'oscillateur 101 placé sur l'axe de symétrie. Cette structure permet de minimiser la disparité dans l'erreur de phase introduite dans la numérisation des échantillons du canal 11 A par rapport à ceux du canal 11B.

Dans un mode de réalisation, comme par exemple à la figure 1, il est prévu un seul récepteur 100 (ou un seul dispositif 1 comportant les éléments indiqués ci-dessus) dans une seule station de base 110, pour déterminer la localisation de l'émetteur 2.

Dans un autre mode de réalisation, il est prévu plusieurs récepteurs 100 (ou plusieurs dispositifs 1 comportant les éléments indiqués ci-dessus ou plusieurs stations de base 110), pour déterminer la localisation de l'émetteur 2. Dans ce cas, le module 18 reçoit les estimations d'angles d'arrivée ANGi calculées par les différents modules 17 des dispositifs 1 ou récepteurs 100 ou stations de base 110 pour déterminer en fonction de ces estimations d'angles d'arrivée ANGi la localisation P de l'émetteur 2. Les récepteurs 100 ou dispositifs 1 ou stations de base 110 ou antennes 10A et 10B de ceux-ci sont par exemple disposés en différentes positions prédéterminées de l'environnement intérieur (par exemple sur un ou des sol(s), et/ou sous un ou des plafond(s), et/ou sur des mur(s), et/ou sur un ou des obstacle(s), et/ou sur une ou des parois, et ce par exemple dans un bâtiment, un immeuble ou autres).

Dans un autre mode de réalisation, il est prévu au moins une station de base 110 ayant un ou plusieurs récepteurs 100.

D'une manière générale, la station de base 110 est définie par le boîtier 111 destiné à être fixé en un endroit déterminé de l'environnement intérieur, par exemple sur un ou des sol(s), et/ou sous un ou des plafond(s), et/ou sur des mur(s), et/ou sur un ou des obstacle(s), et/ou sur une ou des parois, et ce par exemple dans un bâtiment, un immeuble ou autres. Le boîtier 111 contient le ou les récepteur(s) 100 de la station de base 110. Les antennes 10A et 10B du ou des récepteur(s) 100 de la station de base 110 dépassent par exemple du boîtier 111 pour recevoir les signaux de l'environnement.

Dans un autre mode de réalisation représenté aux figures 7 et 8, la station de base 110 comporte, en plus des première et deuxième antennes 10A et 10B au moins une troisième antenne 10C située en une troisième position prédéterminée, ainsi que trois récepteurs 100 tels que décrits ci-dessus, désignés respectivement par M1, M2, M3. La première position de la première antenne 10A, la deuxième position de la deuxième antenne 10B et la troisième position de la troisième antenne 10C sont non alignées. La première position de la première antenne 10A, la deuxième position de la deuxième antenne 10B et la troisième position de la troisième antenne 10C forment donc un triangle. Le premier récepteur M1 est relié à la première antenne 10A et à la deuxième antenne 10B. Le deuxième récepteur M2 est relié à la première antenne 10A et à la troisième antenne 10C.

Le module 17 est alors remplacé par un module 30 de conversion qui calcule deux angles d'arrivée distincts dans un repère à trois dimensions, par exemple en coordonnées sphériques (αi, φi), du signal émis SE par l'émetteur 2 par rapport aux antennes 10A, 10B, 10C en fonction de la première position de la première antenne 10A, de la deuxième position de la deuxième antenne 10B et de la troisième position troisième antenne 10C.La première position de la première antenne 10A, la deuxième position de la deuxième antenne 10B et la troisième position troisième antenne 10C sont par exemple préenregistrées dans le module 30 de conversion. Dans le mode de réalisation représenté à la figure 8, il est prévu en plus le troisième récepteur M3 relié à la deuxième antenne 10B et à la troisième antenne 10C. On détermine deux angles non coplanaires de coordonnées sphériques indiquant la direction d'arrivée de chaque trajet TRi dans l'espace, par exemple l'angle αi d'azimut et l'angle φi d'élévation de l'émetteur dans un référentiel fixe par rapport aux antennes 10A, 10B, 10C.

La figure 7 représente le référentiel de coordonnées sphériques dans un repère à 3 dimensions x, y, z orthonormales se croisant au point O d'origine, l'angle α étant la projection de la position de l'émetteur 2 dans le plan des directions x et y, et φ étant l'angle d'élévation de la position de l'émetteur 2 par rapport au plan des directions x et y. Les antennes 10A, 10B, 10C sont par exemple situées dans le plan des directions x et z.

L'émetteur 2 émet le signal SE qui est capté par les trois antennes 10A, 10B et 10C dont la position est connue, et qui sont respectivement placées à une distance d de l'émetteur 2 telle que la distance d1, d2 et d3 respectivement de l'émetteur 2 à chacune des antennes 10A, 10B et 10C est approximativement égale à d, qui est très grande par rapport à la distance entre les antennes 10A, 10B, 10C (au moins 10 fois supérieure). Le point O, qui sert de référence au système, se trouve à une distance d de l'émetteur 2.

On définit le système de coordonnées polaires ($\alpha$, $\varphi$) à partir du point de référence O.

Dans l'exemple représenté à la figure 7, le système est par exemple construit de telle sorte que : les antennes 10A, 10B et 10C sont dans un même plan et O est situé dans ce plan ; O est à une distance R de chacune des antennes 10A, 10B, 10C ; la distance entre 10A et 10B est égale à D = 2R ; l'antenne 10C est située sur la bissectrice entre 10A et 10B.

Dans le mode de réalisation des figures 7 et 8, le premier récepteur M1 calcule, par rapport aux antennes 10A et 10B auxquelles il est relié, la pluralité de premières différences de phase ou d'argument $\theta i_{21}$ (c'est-à-dire les premières différences de phase $\theta 0_{21}$, $\theta 1_{21}$, ..., $\theta N_{21}$) de respectivement la pluralité de trajets TRi (c'est-à-dire les trajets TR0, TR1, ..., TRN), ainsi que cela est décrit ci-dessus pour le récepteur 100 pour $\theta$i.

Le deuxième récepteur M2 calcule, par rapport aux antennes 10A et 10C auxquelles il est relié, la pluralité de deuxièmes différences de phase ou d'argument $\theta i_{31}$ (c'est-à-dire les deuxièmes différences de phase $\theta 0_{31}$, $\theta 1_{31}$, ..., $\theta N_{31}$) de respectivement la pluralité de trajets TRi (c'est-à-dire les trajets TR0, TR1, ..., TRN), ainsi que cela est décrit ci-dessus pour le récepteur 100 pour $\theta$i.

Le troisième récepteur M3 calcule, par rapport aux antennes 10B et 10C auxquelles il est relié, la pluralité de troisièmes différences de phase ou d'argument $\theta i_{23}$ (c'est-à-dire les troisièmes différences de phase $\theta 0_{23}$, $\theta 1_{23}$, ..., $\theta N_{23}$) de respectivement la pluralité de trajets TRi (c'est-à-dire les trajets TR0, TR1, ..., TRN), ainsi que cela est décrit ci-dessus pour le récepteur 100 pour $\theta$i.

La pluralité de premières différences de phase $\theta i_{21}$, la pluralité de deuxièmes différences de phase $\theta i_{31}$ et la pluralité de troisièmes différences de phase $\theta i_{23}$ sont envoyées au module 30 de conversion, qui les convertit en une pluralité de directions d'arrivée ($\alpha$i, ($\varphi$i) de la pluralité de trajets TRi dans le repère orthonormé défini précédemment. Ce module 30 de conversion peut être prévu à la place du module 17 de conversion de la figure 3. Le module 30 de conversion est relié au module 18 de détermination de la position P de l'émetteur 2 à partir des directions d'arrivée ($\alpha$i, $\varphi$i) des trajets TRi calculées par le module 30 de conversion.

Dans un autre mode de réalisation, seuls les modules M1 et M2 peuvent être prévus et seules la pluralité de premières différences de phase $\theta i_{21}$ et la pluralité de deuxièmes différences de phase $\theta i_{31}$ peuvent être envoyées au module 30 de conversion pour convertir ces différences de phase $\theta i_{21}$ et $\theta i_{31}$ en angles d'arrivée $\alpha$i, $\varphi$i associés aux trajets TRi, le module M3 et/ou les troisièmes différences de phase $\theta i_{23}$ pouvant être omis dans ce cas.

Dans un mode de réalisation, on utilise au moins une première différence de phase $\theta i_{21}$, au moins une deuxième différence de phase $\theta i_{31}$ et éventuellement au moins une troisième différence de phase $\theta i_{23}$, qui ont été déterminées pour le même trajet TRi, afin de calculer N directions d'arrivée ($\alpha$i, $\varphi$i). On peut utiliser par exemple ces différences de phase déterminées pour un même trajet TRi autre que les trajets directs TR0.

Etant donné que les distances entre les antennes sont faibles par rapport aux distances d1, d2, d3 des antennes par rapport à l'émetteur 2, la différence de temps d'arrivée d'un même trajet TRi sur les antennes 10A, 10B, 10C (par exemple de l'ordre de 125 ps pour une distance entre les antennes de 3.75 cm) est plus petite que la précision temporelle des récepteurs (par exemple de l'ordre de la nanoseconde), de telle sorte que le trajet TRi est reçu pratiquement simultanément sur les antennes. Par conséquent, une première différence de phase $\theta i_{21}$, une deuxième différence de phase $\theta i_{31}$ et une troisième différence de phase $\theta i_{23}$ correspondent à un même trajet TRi particulier, lorsqu'ils ont été déterminés en même temps ou à des instants très proches par leur récepteur respectif M1, M2, M3 (en supposant un temps de calcul de chaque différence de phase sensiblement constant dans chaque récepteur), ce qui permet de les distinguer des différences de phase $\theta$i des autres trajets, qui auront été déterminées à des instants bien plus écartés que l'instant de détermination des différence de phase pour ce trajet TRi particulier, ainsi qu'on le voit aux figures 4A, 4B et 4C.

Le module 30 de conversion calcule les angles $\alpha$i et $\varphi$i de coordonnées polaires en fonction de la première différence de phase $\theta i_{21}$, de la deuxième différence de phase $\theta i_{31}$ et de la troisième différence de phase $0i_{23}$ angles calculées (ou de deux de ces trois différences de phase $\theta i_{21}$, $\theta i_{31}$ et $\theta i_{23}$) pour chaque trajet TRi et en fonction des positions connues des antennes 10A, 10B et 10C.

Ci-dessous est donné à titre illustratif et non limitatif un exemple de calcul effectué par le module 30 de conversion, appliqué à l'exemple de réalisation indiqué ci-dessus pour la figure 7, pour lequel on a :

$$\begin{cases} d_1 = d + R\cos\varphi\cos\alpha \\ d_2 = d - R\cos\varphi\cos\alpha \\ d_3 = d - R\sin\varphi \end{cases}$$

A partir de la première différence de phase $\theta i_{21}$ calculée et de la deuxième différence de phase $\theta i_{31}$ calculée, on construit alors une estimation correspondante des angles $\alpha$i et $\varphi$i pour chaque trajet TRi par les relations suivantes, dans lesquelles les indices (i) n'ont pas été mis par souci d'allégement de l'écriture, c'est-à-dire qu'il faut y remplacer :

$\hat{\alpha}$ par $\alpha i$,
$\hat{\varphi}$ par $\varphi i$,
$\hat{\theta}_{31}$ par $\theta i_{31}$,
$\hat{\theta}_{21}$ par $\theta i_{21}$.

$$\begin{cases} \hat{\varphi} = \sin^{-1}\left(\frac{2c}{D\omega}\left(2\hat{\theta}_{31} - \hat{\theta}_{21}\right)\right) \\ \hat{\alpha} = \cos^{-1}\left(\frac{2c}{D\omega}\frac{\hat{\theta}_{21}}{\sqrt{1 - \frac{4c^2}{\omega^2 D^2}\left(2\hat{\theta}_{31} - \hat{\theta}_{21}\right)^2}}\right) + k\pi \end{cases}$$

Le système présenté sur la figure 8 est une implémentation possible de la méthode décrite ci-dessus. Il utilise trois dispositifs de réception radio M1, M2 et M3 permettant, à partir des signaux issus de deux antennes, d'estimer une différence de phase entre lesdits signaux. Les estimations de différence de phases sont collectées et traitées dans une unité de calcul qui réalise la fonction d'estimation des angles $\alpha$ et $\varphi$.

Le module 30 peut par exemple être prévu dans la station de base 110.

Dans ce mode de réalisation, le module 18 peut déterminer la localisaiton probable P de l'émetteur RFID 2 dans un espace à trois dimensions en considérant la problématique du tracé des trajets inverses INVTRi dans l'espace à partir des directions d'arrivées en coordonnées sphériques ($\alpha i$, $\varphi i$) des trajets TRi à une ou plusieurs stations de base 110.

On substitue dans la description du module 18 ci-dessus les références aux angles d'incidence ANGi par des références aux directions d'arrivée en coordonnées sphériques ($\alpha i$, $\varphi i$). La position et l'orientation des surfaces réfléchissantes REF sont alors supposées connues dans l'espace et la position probable de l'émetteur P déterminée par le module 18 est exprimée dans l'espace à trois dimensions.

Dans un mode de réalisation, les antennes 10A, 10B et 10C ont des première, deuxième et troisième positions, qui sont prédéterminées et connues par rapport au boîtier 111 de la station de base 110. Les orientations des antennes 10A, 10B et 10C sont également prédéterminées et connues par rapport au boîtier 111 associé à la station de base 110.

Dans un mode de réalisation, le module 18 peut utiliser les angles d'arrivée en coordonnées sphériques ($\alpha i$, $\varphi i$) des différents trajets TRi fournies par le module 30 d'une unique station de base 110 pour déterminer la position probable dans l'espace de l'émetteur 2.

Dans un autre mode de réalisation, le module 18 peut utiliser les angles d'arrivée en coordonnées sphériques calculées par un ou des modules 30 à partir des angles d'incidence de multiples trajets de propagation par rapport aux antennes 10A, 10B et 10C de respectivement plusieurs stations de base 110 pour déterminer la position probable de l'émetteur 2 dans l'espace.

## Revendications

1. Récepteur (100, M1, M2, M3) comportant au moins une première antenne (10A) de réception d'un signal (SE) émis par un émetteur RFID (2) distant dans un environnement procurant une pluralité de trajets (TRi) distincts de propagation du signal émis (SE) sans fil par l'émetteur (2), le récepteur (100, M1, M2, M3) comportant au moins une deuxième antenne (10B) de réception du signal émis (SE),
   la première antenne (10A) et la deuxième antenne (10B) étant reliées dans le récepteur (100, M1, M2, M3) à respectivement une première voie (11A) de réception fournissant un premier signal de voie (yA) en fonction du signal émis (SE) et une deuxième voie (11B) de réception fournissant un deuxième signal de voie (yB) en fonction du signal émis (SE),
   **caractérisé en ce que**
   le signal (SE) émis sans fil par l'émetteur est du type ultra-large bande,
   la première antenne (10A) définissant un premier canal (A) de réception du signal émis (SE),
   la deuxième antenne (10B) définissant un deuxième canal (B) de réception du signal émis (SE),
   la première antenne (10A) et la deuxième antenne (10B) étant distantes l'une de l'autre et ayant respectivement des première et deuxième positions prédéterminées l'une par rapport à l'autre, de telle sorte que le premier canal (A) de réception soit sensiblement identique au deuxième canal (B) de réception,
   le récepteur (100, M1, M2, M3) comporte en outre un premier module (14A) d'estimation de la première réponse

impulsionnelle (HA, hnA) du premier canal (A) au signal émis (SE) en fonction du signal émis (SE) et du premier signal de voie (yA), un deuxième module (14B) d'estimation de la deuxième réponse impulsionnelle (HB, hnB) du deuxième canal (B) au signal émis (SE) en fonction du signal émis (SE) et du deuxième signal de voie (yB), un troisième module (161) d'extraction pour extraire de la première réponse impulsionnelle (HA) une ou plusieurs premières composantes (hiA) associées respectivement à un ou plusieurs trajets (TRi) arrivant à la première antenne (10A) et pour extraire de la deuxième réponse impulsionnelle (HB) une ou plusieurs deuxièmes composantes (hiB) associées respectivement à un ou plusieurs trajets (TRi) arrivant à la deuxième antenne (10B), et un quatrième module (162) de calcul d'une différence (θi) d'argument entre l'argument (arg(hiA)) de chaque première composante (hiA) de la première réponse impulsionnelle (HA) et l'argument (arg(hiB)) de chaque deuxième composante (hiB) de la deuxième réponse impulsionnelle (HB) pour chaque trajet (TRi),
le récepteur (100) comportant en outre au moins un module (17, 30) de conversion de chaque différence (θi) d'argument en un angle d'arrivée (ANGi ; (αi, φi)) de chaque trajet (TRi) par rapport au récepteur (100).

**2.** Récepteur suivant la revendication 1, **caractérisé en ce que** le récepteur (100, M1, M2, M3) comporte un premier convertisseur (12A, 13A) du signal radiofréquence ($s_A$) reçu par la première antenne (10A) en le premier signal (yA) de voie en bande de base envoyé au premier module (14A) d'estimation et un deuxième convertisseur (12B, 13B) du signal radiofréquence ($s_B$) reçu par la deuxième antenne (10B) en le deuxième signal de voie (yB) en bande de base envoyé au deuxième module (14B) d'estimation.

**3.** Récepteur suivant l'une quelconque des revendications précédentes, **caractérisé en ce que** le premier module (14A) d'estimation calcule la première réponse impulsionnelle (HA) en effectuant une corrélation entre le premier signal de voie (yA) et un signal (CCAL) calculé par permutations circulaires d'une séquence (C) contenue dans le signal émis (SE), le deuxième module (14B) d'estimation calcule la deuxième réponse impulsionnelle (HB) en effectuant une corrélation entre le deuxième signal de voie (yB) et le signal (CCAL) calculé par permutations circulaires de la séquence (C) contenue dans le signal émis (SE).

**4.** Récepteur suivant la revendication 3, **caractérisé en ce que** ladite séquence (C) contenue dans le signal émis (SE) est préenregistrée dans le récepteur (100).

**5.** Récepteur suivant la revendication 3 ou 4, **caractérisé en ce que** ladite séquence (C) contenue dans le signal émis (SE) est une séquence d'impulsions présente dans un en-tête de synchronisation d'un préambule du signal émis (SE).

**6.** Récepteur suivant l'une quelconque des revendications précédentes, **caractérisé en ce que** le module (17) de conversion calcule chaque angle d'arrivée ANGi de chaque trajet par rapport au récepteur (100) selon l'équation suivante :

$$ANGi = \arccos((\arg(hiA) - \arg(hiB)).c/(\omega.D)),$$

où
arg(hiA) - arg(hiB) est la différence d'argument (θi) entre l'argument arg(hiA) de chaque première composante (hiA) de la première réponse impulsionnelle (HA) et l'argument arg(hiB) de chaque deuxième composante (hiB) de la deuxième réponse impulsionnelle (HB) pour chaque trajet (TRi),
ω est la pulsation correspondant à une fréquence centrale d'émission du signal émis (SE),
D est une distance d'écartement entre la première antenne (10A) et la deuxième antenne (10B),
c est la vitesse de la lumière.

**7.** Récepteur suivant l'une quelconque des revendications précédentes, **caractérisé en ce que** le module (17) de conversion convertit chaque différence (θi) d'argument en un angle d'arrivée (ANGi) dans un plan déterminé en deux dimensions.

**8.** Récepteur suivant l'une quelconque des revendications 1 à 6, **caractérisé en ce que** le module (30) de conversion convertit chaque différence (θi) d'argument en un angle d'arrivée (αi, φi) en trois dimensions.

**9.** Récepteur suivant l'une quelconque des revendications précédentes, **caractérisé en ce que** les premier et deuxième modules (14A) d'estimation calculent les première et deuxième réponses impulsionnelles (HA, HB) sous la forme de première et deuxième multiplicités d'échantillons (hnA, hnB) en temps discret,

le module (161) d'extraction sélectionnant chaque première composante (hiA) associée respectivement à chaque trajet (TRi) parmi la première multiplicité d'échantillons (hnA) de la première réponse impulsionnelle (HA),
le module (161) d'extraction sélectionnant chaque deuxième composante (hiB) associée respectivement à chaque trajet (TRi) parmi la deuxième multiplicité d'échantillons (hnB) de la deuxième réponse impulsionnelle (HB).

**10.** Récepteur suivant la revendication 9, **caractérisé en ce que** le module (161) d'extraction sélectionne la pluralité de première et deuxièmes composantes (hiA, hiB) en retenant les premier et deuxième échantillons (hnA, hnB) non nuls en valeur absolue ou supérieurs en valeur absolue à un seuil non nul prescrit.

**11.** Récepteur suivant la revendication 9 ou 10, **caractérisé en ce que**

la première multiplicité d'échantillons $\mathrm{hnA} = \widetilde{\widetilde{H_{A,n}}}$ de la première réponse impulsionnelle (HA) et la deuxième multiplicité d'échantillons $\mathrm{hnB} = \widetilde{\widetilde{H_{B,n}}}$ de la deuxième réponse impulsionnelle (HB) sont calculées selon les formules suivantes :

$$\widetilde{\widetilde{H_{A,n}}} = \sum_{k=0}^{K-1}\sum_{m=0}^{L-1} \tilde{y}_{A,(n\ mod\ S)+m.S+k.L.S} \cdot C_{\left(L+m-\left\lceil \frac{n}{S}\right\rceil\right) mod\ L}$$

$$\widetilde{\widetilde{H_{B,n}}} = \sum_{k=0}^{K-1}\sum_{m=0}^{L-1} \tilde{y}_{B,(n\ mod\ S)+m.S+k.L.S} \cdot C_{\left(L+m-\left\lceil \frac{n}{S}\right\rceil\right) mod\ L}$$

où
n est la variable en temps discret sur les échantillons,
C = { $C_0$ ; $C_1$ ;... $C_{L-1}$} est une séquence de L impulsions élémentaires de période $T_S = S.T_c$ secondes entre les impulsions successives de la séquence C contenue dans le signal émis (SE),
L est un entier naturel non nul,
mod L désigne l'opérateur modulo L,
$T_c$ est la durée de chaque impulsion,
K est le nombre de répétitions de la séquence C,
$\left\lceil \frac{n}{S}\right\rceil$ désigne la partie entière de n/S, arrondie à l'entier supérieur,
S est un entier naturel prescrit,
n est un entier naturel non-nul compris entre 1 et L x S,
$y_{A,n} = \tilde{y}_{A,n}$ désigne les échantillons du signal numérique complexe de la première voie (11A) en bande de base,
$y_{B,n} = \tilde{y}_{B,n}$ désigne les échantillons du signal numérique complexe de la deuxième voie (11B) en bande de base.

**12.** Récepteur suivant l'une quelconque des revendications précédentes, **caractérisé en ce que** le récepteur (100) comporte un seul oscillateur local (101) partagé entre les voies de réception (11A, 11 B).

**13.** Récepteur suivant l'une quelconque des revendications précédentes, **caractérisé en ce que** le récepteur comporte au moins un module (18) pour déterminer une localisation de l'émetteur (2) à partir de chaque angle d'arrivée (ANGi ; ($\alpha$i, $\varphi$i)) de chaque trajet (TRi).

**14.** Récepteur suivant la revendication 13, **caractérisé en ce que** le module (18) pour déterminer la localisation de l'émetteur (2) calcule cette localisation (P) de l'émetteur (2) en fonction de coordonnées préenregistrées d'éléments (REF) de l'environnement réfléchissant le signal émis (SE) et en fonction de la pluralité d'angles d'arrivée (ANGi ; ($\alpha$i, $\varphi$i)) de la pluralité de trajets (TRi).

**15.** Dispositif de localisation d'un émetteur RFID (2) distant dans un environnement procurant une pluralité de trajets

(TRi) distincts de propagation d'un signal émis (SE) sans fil par l'émetteur (2), le dispositif comportant au moins une troisième antenne (10C) située en une troisième position prédéterminée,
le dispositif comporte, comme récepteur (100), au moins un premier récepteur (100, M1) suivant l'une quelconque des revendications précédentes pour calculer une pluralité de premières différences d'argument ($\theta i_{21}$) pour respectivement la pluralité de trajets (TRi), et au moins un deuxième récepteur (100, M2) suivant l'une quelconque des revendications précédentes, dont les première et deuxième voies sont reliées respectivement à la première antenne (10A) et à la troisième antenne (10C) pour calculer une pluralité de deuxièmes différences d'argument ($\theta i_{31}$) pour respectivement la pluralité de trajets (TRi),
la première position de la première antenne (10A), la deuxième position de la deuxième antenne (10B) et la troisième position de la troisième antenne (10C) étant non alignées,
le module (30) de conversion convertissant la pluralité de premières différences d'argument ($\theta i_{21}$) et la pluralité de deuxièmes différences d'argument ($\theta i_{31}$) respectivement en une pluralité d'angles d'arrivée ($\alpha$i, $\varphi$i) de la pluralité de trajets (TRi) par rapport aux récepteurs (M1, M2).

**16.** Dispositif suivant la revendication 15, **caractérisé en ce que** le dispositif comporte en outre, comme récepteur (100), au moins un troisième récepteur (100, M3) suivant l'une quelconque des revendications précédentes, dont les première et deuxième voies sont reliées respectivement à la troisième antenne (10C) et à la deuxième antenne (10B) pour calculer une pluralité de troisièmes différences d'argument ($\theta i_{23}$) pour respectivement la pluralité de trajets (TRi),
le module (30) de conversion convertissant la pluralité de premières différences d'argument ($\theta i_{21}$), la pluralité de deuxièmes différences d'argument ($\theta i_{31}$) et la pluralité de troisièmes différences d'argument ($\theta i_{23}$) respectivement en une pluralité d'angles d'arrivée ($\alpha$i, $\varphi$i) de la pluralité de trajets (TRi) par rapport aux récepteurs (M1, M2).

**17.** Procédé de localisation d'un émetteur RFID (2) distant dans un environnement procurant une pluralité de trajets (TRi) distincts de propagation d'un signal émis (SE) sans fil par l'émetteur (2), à l'aide d'au moins un récepteur suivant l'une quelconque des revendications 1 à 15, procédé dans lequel
on reçoit le signal émis (SE) sur au moins une première antenne (10A) de réception et au moins une deuxième antenne (10B) de réception du au moins un récepteur (100, M1, M2, M3), la première antenne (10A) et la deuxième antenne (10B) étant reliées dans le récepteur (100, M1, M2, M3) à respectivement une première voie (11A) de réception fournissant un premier signal de voie (yA) en fonction du signal émis (SE) et une deuxième voie (11B) de réception fournissant un deuxième signal de voie (yB) en fonction du signal émis (SE),
**caractérisé en ce que**
le signal (SE) émis sans fil par l'émetteur est du type ultra-large bande,
la première antenne (10A) définissant un premier canal (A) de réception du signal émis (SE) selon la pluralité de trajets (TRi),
la deuxième antenne (10B) définissant un deuxième canal (B) de réception du signal émis (SE) selon la pluralité de trajets (TRi),
la première antenne (10A) et la deuxième antenne (10B) étant distantes l'une de l'autre et ayant respectivement des première et deuxième positions prédéterminées l'une par rapport à l'autre, de telle sorte que le premier canal (A) de réception soit sensiblement identique au deuxième canal (B) de réception,
on estime par le récepteur (100, M1, M2, M3) la première réponse impulsionnelle (HA, hnA) du premier canal (A) ayant la pluralité de trajets (TRi) au signal émis (SE) en fonction du signal émis (SE) et du premier signal de voie (yA), on estime par le récepteur (100, M1, M2, M3) la deuxième réponse impulsionnelle (HB, hnB) du deuxième canal (B) ayant la pluralité de trajets (TRi) au signal émis (SE) en fonction du signal émis (SE) et du deuxième signal de voie (yB),
on extrait (161) de la première réponse impulsionnelle (HA) par le récepteur (100, M1, M2, M3) une pluralité de premières composantes (hiA) associées respectivement à la pluralité de trajets (TRi) arrivant à la première antenne (10A), et on extrait de la deuxième réponse impulsionnelle (HB) par le récepteur (100, M1, M2, M3) une pluralité de deuxièmes composantes (hiB) associées respectivement à la pluralité de trajets (TRi) arrivant à la deuxième antenne (10B),
on calcule par le récepteur (100, M1, M2, M3) une pluralité de différences ($\theta$i) d'argument entre l'argument (arg(hiA)) de chaque première composante (hiA) de la première réponse impulsionnelle (HA) et l'argument (arg(hiB)) de chaque deuxième composante (hnB) de la deuxième réponse impulsionnelle (HB) pour respectivement la pluralité de trajets (TRi),
on convertit par le récepteur (100, M1, M2, M3) la pluralité de différences ($\theta$i) d'argument en une pluralité d'angles d'arrivée (ANGi ; ($\alpha$i, $\varphi$i)) de la pluralité de trajets (TRi) par rapport au récepteur (100).

**18.** Procédé suivant la revendication 17, **caractérisé en ce que** l'on détermine par le récepteur une localisation de

l'émetteur (2) à partir de la pluralité d'angles d'arrivée (ANGi ; (αi, φi)) de la pluralité de trajets (TRi).

## Patentansprüche

1. Empfänger (100, M1, M2, M3), der mindestens eine erste Antenne (10A) zum Empfang eines Signals (SE) umfasst, das von einem entfernten RFID-Sender (2) in einer Umgebung gesendet wurde, die mehrere unterschiedliche Ausbreitungswege (TRi) des drahtlos durch den Sender (2) gesendeten Signals (SE) bereitstellt, wobei der Empfänger (100, M1, M2, M3) mindestens eine zweite Antenne (10B) zum Empfang des gesendeten Signals (SE) umfasst,
wobei die erste Antenne (10A) und die zweite Antenne (10B) im Empfänger (100, M1, M2, M3) mit einem ersten Empfangspfad (11A), der ein erstes Pfadsignal (yA) in Abhängigkeit vom gesendeten Signal (SE) liefert, beziehungsweise einem zweiten Empfangspfad (11B) verbunden sind, der ein zweites Pfadsignal (yB) in Abhängigkeit von dem gesendeten Signal (SE) liefert,
**dadurch gekennzeichnet, dass**
das durch den Sender drahtlos gesendete Signal (SE) vom Typ Ultrabreitband ist,
die erste Antenne (10A) einen ersten Kanal (A) zum Empfang des gesendeten Signals (SE) definiert,
die zweite Antenne (10B) einen zweiten Kanal (B) zum Empfang des gesendeten Signals (SE) definiert,
die erste Antenne (10A) und die zweite Antenne (10B) voneinander beabstandet sind und vorbestimmte erste beziehungsweise zweite Positionen in Bezug zueinander aufweisen, derart, dass der erste Empfangskanal (A) im Wesentlichen mit dem zweiten Empfangskanal (B) identisch ist,
wobei der Empfänger (100, M1, M2, M3) ferner ein erstes Modul (14A) zur Schätzung der ersten Impulsantwort (HA, hnA) des ersten Kanals (A) auf das gesendete Signal (SE) in Abhängigkeit von dem gesendeten Signal (SE) und dem ersten Pfadsignal (yA), ein zweites Modul (14B) zur Schätzung der zweiten Impulsantwort (HB, hnB) des zweiten Kanals (B) auf das gesendete Signal (SE) in Abhängigkeit von dem gesendeten Signal (SE) und dem zweiten Pfadsignal (yB), ein drittes Modul (161) zur Wiedergewinnung, um eine oder mehrere erste Komponenten (hiA), die jeweils einem oder mehreren Wegen (TRi) zugehörig sind, die an der ersten Antenne (10A) ankommen, von der ersten Impulsantwort (HA) wiederzugewinnen, und um eine oder mehrere zweite Komponenten (hiB), die jeweils einem oder mehreren Wegen (TRi) zugehörig sind, die an der zweiten Antenne (10B) ankommen, von der zweiten Impulsantwort (HB) wiederzugewinnen, und ein viertes Modul (162) zur Berechnung einer Argumentdifferenz (θi) zwischen dem Argument (arg(hiA)) von jeder ersten Komponente (hiA) der ersten Impulsantwort (HA) und dem Argument (arg(hiB)) von jeder zweiten Komponente (hiB) der zweiten Impulsantwort (HB) für jeden Weg (TRi) umfasst,
wobei der Empfänger (100) ferner mindestens ein Modul (17, 30) zur Umwandlung von jeder Argumentdifferenz (θi) in einen Einfallswinkel (ANGi; (αi, φi)) von jedem Weg (TRi) in Bezug zum Empfänger (100) umfasst.

2. Empfänger nach Anspruch 1, **dadurch gekennzeichnet, dass** der Empfänger (100, M1, M2, M3) einen ersten Wandler (12A, 13A), um das durch die erste Antenne (10A) empfangene Radiofrequenzsignal ($S_A$) in das erste Pfadsignal (yA) im Basisband umzuwandeln, das an das erste Schätzungsmodul (14A) gesendet wird, und einen zweiten Wandler (12B, 13B) umfasst, um das durch die zweite Antenne (10B) empfangene Radiofrequenzsignal ($S_B$) in das zweite Pfadsignal (yB) im Basisband umzuwandeln, das an das zweite Schätzungsmodul (14B) gesendet wird.

3. Empfänger nach einem der vorhergehenden Ansprüche, **dadurch gekennzeichnet, dass** das erste Modul (14A) zur Schätzung die erste Impulsantwort (HA) durch Durchführen einer Korrelation zwischen dem ersten Kanalsignal (yA) und einem Signal (CCAL) berechnet, das durch zyklische Permutationen einer Sequenz (C) berechnet wird, die in dem gesendeten Signal (SE) enthalten ist, wobei das zweite Schätzungsmodul (14B) die zweite Impulsantwort (HB) durch Durchführen einer Korrelation zwischen dem zweiten Pfadsignal (yB) und dem Signal (CCAL) berechnet, das durch zyklische Permutationen der Sequenz (C) berechnet wird, die in dem gesendeten Signal (SE) enthalten ist.

4. Empfänger nach Anspruch 3, **dadurch gekennzeichnet, dass** die Sequenz (C), die in dem gesendeten Signal (SE) enthalten ist, in dem Empfänger (100) vorgespeichert ist.

5. Empfänger nach Anspruch 3 oder 4, **dadurch gekennzeichnet, dass** die Sequenz (C), die in dem gesendeten Signal (SE) enthalten ist, eine Impulssequenz ist, die in einem Synchronisationskopf einer Präambel des gesendeten Signals (SE) vorhanden ist.

6. Empfänger nach einem der vorhergehenden Ansprüche, **dadurch gekennzeichnet, dass** das Umwandlungsmodul

(17) jeden Einfallswinkel ANGi von jedem Weg in Bezug zu dem Empfänger (100) gemäß der folgenden Gleichung berechnet:

$$ANGi = \arccos((\arg(hiA)-\arg(hiB)).c/(\omega.D)),$$

wo
arg(hiA) - arg(hiB) die Argumentdifferenz (θi) zwischen dem Argument arg(hiA) von jeder ersten Komponente (hiA) der ersten Impulsantwort (HA) und dem Argument arg(hiB) von jeder zweiten Komponente (hiB) der zweiten Impulsantwort (HB) für jeden Weg (TRi) ist,
ω die Kreisfrequenz ist, die einer Mittenfrequenz der Sendung des gesendeten Signals (SE) entspricht,
D eine Entfernung zwischen der ersten Antenne (10A) und der zweiten Antenne (10B) ist,
c die Lichtgeschwindigkeit ist.

**7.** Empfänger nach einem der vorhergehenden Ansprüche, **dadurch gekennzeichnet, dass** das Umwandlungsmodul (17) jede Argumentdifferenz (θi)in einen Einfallswinkel (ANGi) in einer bestimmten Ebene in zwei Dimensionen umwandelt.

**8.** Empfänger nach einem der Ansprüche 1 bis 6, **dadurch gekennzeichnet, dass** das Umwandlungsmodul (30) jede Argumentdifferenz (θi) in einen Einfallswinkel (αi, φ1) in drei Dimensionen umwandelt.

**9.** Empfänger nach einem der vorhergehenden Ansprüche, **dadurch gekennzeichnet, dass** das erste und das zweite Schätzungsmodul (14A) die ersten und zweiten Impulsantworten (HA, HB) in der Form von ersten und zweiten Vielzahlen von Abtastwerten (hnA, hnB) in diskreter Zeit berechnen,
wobei das Wiedergewinnungsmodul (161) jede erste Komponente (hiA) auswählt, die jeweils jedem Weg (TRi) unter der ersten Vielzahl von Abtastwerten (hnA) der ersten Impulsantwort (HA) zugehörig ist,
wobei das Wiedergewinnungsmodul (161) jede zweite Komponente (hiB) auswählt, die jeweils jedem Weg (TRi) unter der zweiten Vielzahl von Abtastwerten (hnB) der zweiten Impulsantwort (HB) zugehörig ist.

**10.** Empfänger nach Anspruch 9, **dadurch gekennzeichnet, dass** das Wiedergewinnungsmodul (161) die mehreren ersten und zweiten Komponenten (hiA, hiB) auswählt, indem es die ersten und zweiten Abtastwerte (hnA, hnB) berücksichtigt, deren Absolutwert nicht null ist oder deren Absolutwert höher als ein vorgeschriebener Schwellenwert ist, der nicht null ist.

**11.** Empfänger nach Anspruch 9 oder 10, **dadurch gekennzeichnet, dass** die erste Vielzahl von Abtastwerten $hnA = \widehat{\widehat{H_{A,n}}}$ der ersten Impulsantwort (HA) und die zweite Vielzahl von Abtastwerten $hnB = \widehat{\widehat{H_{B,n}}}$ der zweiten Impulsantwort (HB) gemäß den folgenden Formeln berechnet werden:

$$\widehat{\widehat{H_{A,n}}} = \sum_{k=0}^{K-1} \sum_{m=0}^{L-1} \tilde{y}_{A,(n \bmod S)+m.S+k.L.S} \cdot C_{\left(L+m-\left\lfloor\frac{n}{S}\right\rfloor\right) \bmod L}$$

$$\widehat{\widehat{H_{B,n}}} = \sum_{k=0}^{K-1} \sum_{m=0}^{L-1} \tilde{y}_{B,(n \bmod S)+m.S+k.L.S} \cdot C_{\left(L+m-\left\lfloor\frac{n}{S}\right\rfloor\right) \bmod L}$$

WO n die Variable in diskreter Zeit auf den Abtastwerten ist,
$C = \{ C_0; C_1;\ldots C_{L-1}\}$ eine Sequenz von L Elementarimpulsen der Periode $T_s = S.T_c$ Sekunden zwischen aufeinanderfolgenden Impulsen der Sequenz C ist, die in dem gesendeten Signal (SE) enthalten ist,
L eine natürliche Zahl ist, die nicht Null ist,
mod L den Modulo-L-Operator bezeichnet,
$T_c$ die Dauer von jedem Impuls ist,
K die Anzahl Wiederholungen der Sequenz C ist,

$\left\lceil \frac{n}{S} \right\rceil$ den ganzzahligen Teil von n/S, aufgerundet auf die höhere ganze Zahl bezeichnet,

S eine vorgeschriebene natürliche Zahl ist,
n eine natürliche Zahl ist, die nicht Null und zwischen 1 und L x S enthalten ist,
$y_{A,n} = \tilde{y}_{A,n}$ Abtastwerte des komplexen digitalen Signals des ersten Pfads (11A) im Basisband bezeichnet,
$y_{B,n} = y_{B,n}$ Abtastwerte des komplexen digitalen Signals des zweiten Pfads (11B) im Basisband bezeichnet.

**12.** Empfänger nach einem der vorhergehenden Ansprüche, **dadurch gekennzeichnet, dass** der Empfänger (100) einen einzigen Empfangsoszillator (101) umfasst, der unter den Empfangskanälen (11A, 11B) geteilt wird.

**13.** Empfänger nach einem der vorhergehenden Ansprüche, **dadurch gekennzeichnet, dass** der Empfänger mindestens ein Modul (18) umfasst, um eine Ortung des Senders (2) ausgehend von jedem Einfallswinkel (ANGi; (αi, φi)) von jedem Weg (TRi) zu bestimmen.

**14.** Empfänger nach Anspruch 13, **dadurch gekennzeichnet, dass** das Modul (18) zum Bestimmen der Ortung des Senders (2) diese Ortung (P) des Senders (2) in Abhängigkeit von im Voraus gespeicherten Koordinaten von Elementen (REF) der Umgebung, die das gesendete Signal (SE) reflektieren, und in Abhängigkeit von den mehreren Einfallswinkeln (ANGi; (αi, φi)) von den mehreren Wegen (TRi) berechnet.

**15.** Vorrichtung zur Ortung eines entfernten RFID-Senders (2) in einer Umgebung, die mehrere getrennte Ausbreitungswege (TRi) eines durch den Sender (2) drahtlos gesendeten Signals (SE) bereitstellt, wobei die Vorrichtung mindestens eine dritte Antenne (10C) umfasst, die sich an einer dritten vorbestimmten Position befindet,
wobei die Vorrichtung als Empfänger (100) mindestens einen ersten Empfänger (100, M1) nach einem der vorhergehenden Ansprüche, um mehrere erste Argumentdifferenzen ($\theta i_{21}$) für jeweils die mehreren Wege (TRi) zu berechnen, und mindestens einen zweiten Empfänger (100, M2) nach einem der vorhergehenden Ansprüche umfasst, dessen erster und zweiter Pfad mit der ersten Antenne (10A) beziehungsweise mit der dritten Antenne (10C) verbunden sind, um mehrere zweite Argumentdifferenzen ($\theta i_{31}$) für die jeweiligen mehreren Wege (TRi) zu berechnen, wobei die erste Position der ersten Antenne (10A), die zweite Position der zweiten Antenne (10B) und die dritte Position der dritten Antenne (10C) nicht ausgerichtet sind,
wobei das Umwandlungsmodul (30) die mehreren ersten Argumentdifferenzen ($\theta i_{21}$) und die mehreren zweiten Argumentdifferenzen ($\theta i_{31}$) jeweils in mehrere Einfallswinkel (αi, φi) der mehreren Wege (TRi) in Bezug zu den Empfängern (M1, M2) umwandelt.

**16.** Vorrichtung nach Anspruch 15, **dadurch gekennzeichnet, dass** die Vorrichtung ferner als Empfänger (100) mindestens einen dritten Empfänger (100, M3) nach einem der vorhergehenden Ansprüche umfasst, dessen erster und zweiter Pfad mit der dritten Antenne (10C) beziehungsweise mit der zweiten Antenne (10B) verbunden sind, um mehrere dritte Argumentdifferenzen ($\theta i_{23}$) für die jeweiligen mehreren Wege (TRi) zu berechnen,
wobei das Umwandlungsmodul (30) die mehreren ersten Argumentdifferenzen ($\theta i_{21}$), die mehreren zweiten Argumentdifferenzen ($\theta i_{3,}$) und die mehreren dritten Argumentdifferenzen ($\theta i_{23}$) jeweils in mehrere Einfallswinkel (αi, φi) der mehreren Wege (TRi) in Bezug zu den Empfängern (M1, M2) umwandelt.

**17.** Verfahren zur Ortung eines entfernten RFID-Senders (2) in einer Umgebung, die mehrere getrennte Ausbreitungswege (TRi) eines durch den Sender (2) drahtlos gesendeten Signals (SE) bereitstellt, mittels mindestens eines Empfängers nach einem der Ansprüche 1 bis 15, wobei in dem Verfahren:

das gesendete Signal (SE) auf mindestens einer ersten Empfangsantenne (10A) und mindestens einer zweiten Empfangsantenne (10B) des mindestens einen Empfängers (100, M1, M2, M3) empfangen wird, wobei die erste Antenne (10A) und die zweite Antenne (10B) in dem Empfänger (100, M1, M2, M3) mit einem ersten Empfangspfad (11A), der ein erstes Pfadsignal (yA) in Abhängigkeit von dem gesendeten Signal (SE) liefert, beziehungsweise mit einem zweiten Empfangspfad (11B) verbunden sind, der ein zweites Pfadsignal (yB) in Abhängigkeit von dem gesendeten Signal (SE) liefert,
**dadurch gekennzeichnet, dass**
das drahtlos durch den Sender gesendete Signal (SE) vom Typ Ultrabreitband ist,
die erste Antenne (10A) einen ersten Empfangskanal (A) des gesendeten Signals (SE) gemäß den mehreren Wegen (TRi) definiert,
die zweite Antenne (10B) einen zweiten Empfangskanal (B) des gesendeten Signals (SE) gemäß den mehreren Wegen (TRi) definiert,

die erste Antenne (10A) und die zweite Antenne (10B) voneinander beabstandet sind und erste beziehungsweise zweite vorbestimmte Positionen in Bezug zueinander aufweisen, derart, dass der erste Empfangskanal (A) im Wesentlichen identisch mit dem zweiten Empfangskanal (B) ist,
durch den Empfänger (100, M1, M2, M3) die erste Impulsantwort (HA, hnA) des ersten Kanals (A), der mehrere Wege (TRi) aufweist, auf das gesendete Signal (SE) in Abhängigkeit von dem gesendeten Signal (SE) und dem ersten Pfadsignal (yA) geschätzt wird, durch den Empfänger (100, M1, M2, M3) die zweite Impulsantwort (HB, hnB) des zweiten Kanals (B), der mehrere Wege (TRi) aufweist, auf das gesendete Signal (SE) in Abhängigkeit von dem gesendeten Signal (SE) und dem zweiten Pfadsignal (yB) geschätzt wird,
von der ersten Impulsantwort (HA) durch den Empfänger (100, M1, M2, M3) mehrere erste Komponenten (hiA) wiedergewonnen werden (161), die jeweils den mehreren Wegen (TRi) zugehörig sind, die an der ersten Antenne (10A) ankommen, und von der zweiten Impulsantwort (HB) durch den Empfänger (100, M1, M2, M3) mehrere zweite Komponenten (hiB) wiedergewonnen werden, die jeweils den mehreren Wegen (TRi) zugehörig sind, die an der zweiten Antenne (10B) ankommen,
durch den Empfänger (100, M1, M2, M3) mehrere Argumentdifferenzen ($\theta_1$) zwischen dem Argument (arg(hiA)) von jeder ersten Komponente (hiA) der ersten Impulsantwort (HA) und dem Argument (arg(hiB)) von jeder zweiten Komponente (hnB) der zweiten Impulsantwort (HB) für die jeweiligen Wege (TRi) berechnet werden,
durch den Empfänger (100, M1, M2, M3) die mehreren Argumentdifferenzen ($\theta_1$) in mehrere Einfallswinkel (ANGi;(ai, $\varphi$i)) der mehreren Wege (TRi) in Bezug zum Empfänger (100) umgewandelt werden.

**18.** Verfahren nach Anspruch 17, **dadurch gekennzeichnet, dass** durch den Empfänger eine Ortung des Senders (2) ausgehend von den mehreren Einfallswinkeln (ANGi ; ($\alpha$i, $\varphi$i)) der mehreren Wege (TRi) bestimmt wird.

**Claims**

**1.** A receiver (100, M1, M2, M3) comprising at least one first antenna (10A) for receiving a signal (SE) emitted by a distant RFID transmitter (2) in an environment involving a plurality of separate paths (TRi) for propagation of the signal (SE) emitted wirelessly by the transmitter (2), the receiver (100, M1, M2, M3) comprising at least one second antenna (10B) for receiving of the emitted signal (SE),
the first antenna (10A) and the second antenna (10B) being connected in the receiver (100, M1, M2, M3) to respectively a first receiving path (11A) supplying a first path signal (yA) as a function of the emitted signal (SE) and a second receiving path (11B) supplying a second path signal (yB) as a function of the emitted signal (SE),
**characterized in that**
the signal (SE) emitted wirelessly by the transmitter is of the ultra-wide band type,
the first antenna (10A) defining a first receiving channel (A) for receiving of the emitted signal (SE),
the second antenna (10B) defining a second receiving channel (B) for receiving of the emitted signal (SE),
the first antenna (10A) and the second antenna (10B) being at a distance from each other and respectively having first and second predetermined positions relative to each other, such that the first receiving channel (A) is substantially identical to the second receiving channel (B),
the receiver (100, M1, M2, M3) further comprises a first estimation module (14A) for estimation of the first impulse response (HA, hnA) of the first channel (A) to the emitted signal (SE) as a function of the emitted signal (SE) and of the first path signal (yA), a second estimation module (14B) for estimation of the second impulse response (HB, hnB) of the second channel (B) to the emitted signal (SE) as a function of the emitted signal (SE) and of the second path signal (yB), a third extraction module (161) for extracting from the first impulse response (HA) one or more first components (hiA) associated respectively with one or more paths (TRi) arriving at the first antenna (10A) and for extracting from the second impulse response (HB) one or more second components (hiB) associated respectively with one or more paths (TRi) arriving at the second antenna (10B), and a fourth module (162) for calculating an argument difference ($\theta$i) between the argument (arg(hiA)) of each first component (hiA) of the first impulse response (HA) and the argument (arg(hiB)) of each second component (hiB) of the second impulse response (HB) for each path (TRi),
the receiver (100) further comprising at least one conversion module (17, 30) for converting of each argument difference ($\theta$i) into an angle of arrival (ANGi; ($\alpha$i, $\varphi$i)) of each path (TRi) relative to the receiver (100).

**2.** The receiver according to claim 1, **characterized in that** the receiver (100, M1, M2, M3) comprises a first converter (12A, 13A) for converting of the radio frequency signal ($s_A$) received by the first antenna (10A) into the first path signal (yA) in base band sent to the first estimation module (14A) and a second converter (12B, 13B) for converting of the radio frequency signal ($s_B$) received by the second antenna (10B) into the second path signal (yB) in base band sent to the second estimation module (14B).

**3.** The receiver according to any one of the preceding claims, **characterized in that** the first estimation module (14A) calculates the first impulse response (HA) by making a correlation between the first path signal (yA) and a signal (CCAL) calculated by circular permutations of a sequence (C) contained in the emitted signal (SE), the second estimation module (14B) calculates the second impulse response (HB) by making a correlation between the second path signal (yB) and the signal (CCAL) calculated by circular permutations of the sequence (C) contained in the emitted signal (SE).

**4.** The receiver according to claim 3, **characterized in that** said sequence (C) contained in the emitted signal (SE) is pre-registered in the receiver (100).

**5.** The receiver according to claim 3 or 4, **characterized in that** said sequence (C) contained in the emitted signal (SE) is a sequence of pulses present in a synchronisation heading of a preamble of the emitted signal (SE).

**6.** The receiver according to any one of the preceding claims, **characterized in that** the conversion module (17) calculates each angle of arrival ANGi of each path relative to the receiver (100) according to the following equation:

$$ANGi=\arccos((\arg(hiA)-\arg(hiB)).c/(\omega.D)),$$

where
arg(hiA) - arg(hiB) is the argument difference ($\theta i$) between the argument arg(hiA) of each first component (hiA) of the first impulse response (HA) and the argument arg(hiB) of each second component (hiB) of the second impulse response (HB) for each path (TRi),
$\omega$ is the pulsation corresponding to a central emission frequency of the emitted signal (SE),
D is a separation distance between the first antenna (10A) and the second antenna (10B),
c is the speed of light.

**7.** The receiver according to any one of the preceding claims, **characterized in that** the conversion module (17) converts each argument difference ($\theta i$) into an angle of arrival (ANGi) in a determined two-dimensional plan.

**8.** The receiver according to any one of claims 1 to 6, **characterized in that** the conversion module (30) converts each argument difference ($\theta i$) into a three-dimensional angle of arrival ($\alpha i$, $\varphi i$).

**9.** The receiver according to any one of the preceding claims, **characterized in that** the first and second estimation modules (14A) calculate the first and second impulse responses (HA, HB) in the form of first and second multiplicities of samples (hnA, hnB) in discrete time,
the extraction module (161) selecting each first component (hiA) associated respectively with each path (TRi) among the first multiplicity of samples (hnA) of the first impulse response (HA),
the extraction module (161) selecting each second component (hiB) associated respectively with each path (TRi) among the second multiplicity of samples (hnB) of the second impulse response (HB).

**10.** The receiver according to claim 9, **characterized in that** the extraction module (161) selects the plurality of first and second components (hiA, hiB) by retaining the first and second samples (hnA, hnB) which are non-zero in absolute value or greater in absolute value than a prescribed non-zero threshold.

**11.** The receiver according to claim 9 or 10, **characterized in that**
the first multiplicity of samples $hnA = \widehat{H_{A,n}}$ of the first impulse response (HA) and the second multiplicity of samples $hnB = \widehat{H_{B,n}}$ of the second impulse response (HB) are calculated according to the following formulas:

$$\widehat{H_{A,n}} = \sum_{k=0}^{K-1}\sum_{m=0}^{L-1} \tilde{y}_{A,(n\ mod\ S)+m.S+k.L.S} \cdot C_{\left(L+m-\left\lfloor\frac{n}{S}\right\rfloor\right)\ mod\ L}$$

$$\widetilde{H_{B,n}} = \sum_{k=0}^{K-1}\sum_{m=0}^{L-1} \tilde{y}_{B,(n \bmod S)+m.S+k.L.S} \cdot C_{\left(L+m-\left\lceil \frac{n}{S} \right\rceil\right) \bmod L}$$

where
n is the discrete time variable on the samples,
$C = \{ C_0; C_1;... C_{L_1} \}$ is a sequence of L elementary pulses of period $T_S = S.T_c$ seconds between the successive pulses of the sequence C contained in the emitted signal (SE),
L is a natural non-zero integer,
mod L designates the modulo L operator,
$T_c$ is the duration of each pulse,
K is the number of repetitions of the sequence C, $\left\lceil \frac{n}{S} \right\rceil$ designates the integer part of n/S, rounded up to the next integer,
S is a prescribed integer,
n is a non-zero integer between 1 and L x S,
$y_{A,n} = \tilde{y}_{A,n}$ designates the samples of the complex digital signal of the first path (11A) in base band,
$y_{B,n} = \tilde{y}_{B,n}$ designates the samples of the complex digital signal of the second path (11B) in base band.

**12.** The receiver according to any one of the preceding claims, **characterized in that** the receiver (100) comprises a single local oscillator (101) shared between the receiving paths (11A, 11B).

**13.** The receiver according to any one of the preceding claims, **characterized in that** the receiver comprising at least one module (18) for determining a location of the transmitter (2) from each angle of arrival (ANGi; ($\alpha$i, $\varphi$i)) of each path (TRi).

**14.** The receiver according to claim 13, **characterized in that** the module (18) for determining the location of the transmitter (2) calculates this location (P) of the transmitter (2) as a function of pre-registered coordinates of elements (REF) of the environment reflecting the emitted signal (SE) and as a function of the plurality of angles of arrival (ANGi; ($\alpha$i, $\varphi$i)) of the plurality of paths (TRi).

**15.** A device for location of a distant RFID transmitter (2) in an environment involving a plurality of separate paths (TRi) for propagation of a signal (SE) emitted wirelessly by the transmitter (2), the device comprising at least one third antenna (10C) located in a third predetermined position,
the device comprises, as receiver (100), at least one first receiver (100, M1) according to any one of the preceding claims for calculating a plurality of first argument differences ($\theta i_{21}$) respectively for the plurality of paths (TRi), and at least one second receiver (100, M2) according to any one of the preceding claims, having the first and second paths connected respectively to the first antenna (10A) and to the third antenna (10C) for calculating a plurality of second argument differences ($\theta i_{31}$) respectively for the plurality of paths (TRi),
the first position of the first antenna (10A), the second position of the second antenna (10B) and the third position of the third antenna (10C) being non-aligned,
the conversion module (30) converting the plurality of first argument differences ($\theta i_{21}$) and the plurality of second argument differences ($\theta i_{31}$ respectively into a plurality of angles of arrival ($\alpha$i, $\varphi$i) of the plurality of paths (TRi) relative to the receivers (M1, M2).

**16.** The device according to claim 15, **characterized in that** device further comprises, as receiver (100), at least one third receiver (100, M3) according to any one of the preceding claims, having the first and second paths connected respectively to the third antenna (10C) and to the second antenna (10B) for calculating a plurality of third argument differences ($\theta i_{23}$) respectively for the plurality of paths (TRi),
the conversion module (30) converting the plurality of first argument differences ($\theta i_{21}$), the plurality of second argument differences ($\theta i_{31}$) and the plurality of third argument differences ($\theta i_{23}$) respectively into a plurality of angles of arrival ($\alpha$i, $\theta$i) of the plurality of paths (TRi) relative to the receivers (M1, M2).

**17.** A method for location of a distant RFID transmitter (2) in an environment involving a plurality of separate paths (TRi) for propagation of a signal (SE) emitted wirelessly by the transmitter (2), by means of at least one receiver according to any one of claims 1 to 15, a method in which
the emitted signal (SE) is received on at least one first receiving antenna (10A) and at least one second receiving

antenna (10B) of the at least one receiver (100, M1, M2, M3), the first antenna (10A) and the second antenna (10B) being connected in the receiver (100, M1, M2, M3) respectively to a first receiving path (11A) supplying a first path signal (yA) as a function of the emitted signal (SE) and a second receiving path (11B) supplying a second path signal (yB) as a function of the emitted signal (SE),
**characterized in that**
the signal (SE) emitted wirelessly by the transmitter is of the ultra-wide band type,
the first antenna (10A) defining a first receiving channel (A) for receiving of the emitted signal (SE) according to the plurality of paths (TRi),
the second antenna (10B) defining a second receiving channel (B) for receiving of the emitted signal (SE) according to the plurality of paths (TRi),
the first antenna (10A) and the second antenna (10B) being at a distance from each other and having respectively first and second predetermined positions relative to each other, such that the first receiving channel (A) is substantially identical to the second receiving channel (B),
the first impulse response (HA, hnA) of the first channel (A) having the plurality of paths (TRi) to the emitted signal (SE) is estimated by the receiver (100, M1, M2, M3) as a function of the emitted signal (SE) and of the first path signal (yA), the second impulse response (HB, hnB) of the second channel (B) having the plurality of paths (TRi) to the emitted signal (SE) is estimated by the receiver (100, M1, M2, M3) as a function of the emitted signal (SE) and of the second path signal (yB),
a plurality of first components (hiA) associated respectively with the plurality of paths (TRi) arriving at the first antenna (10A) is extracted (161) from the first impulse response (HA) by the receiver (100, M1, M2, M3), and a plurality of second components (hiB) associated respectively with the plurality of paths (TRi) arriving at the second antenna (10B) is extracted from the second impulse response (HB) by the receiver (100, M1, M2, M3),
a plurality of argument differences (θi) between the argument (arg(hiA)) of each first component (hiA) of the first impulse response (HA) and the argument (arg(hiB)) of each second component (hnB) of the second impulse response (HB) respectively for the plurality of paths (TRi) is calculated by the receiver (100, M1, M2, M3),
the plurality of argument differences (θi) is converted by the receiver (100, M1, M2, M3) into a plurality of angles of arrival (ANGi; (αi, φi)) of the plurality of paths (TRi) relative to the receiver (100).

**18.** The method according to claim 17, **characterized in that** a location of the transmitter (2) is determined by the receiver from the plurality of angles of arrival (ANGi; (αi, φi)) of the plurality of paths (TRi).

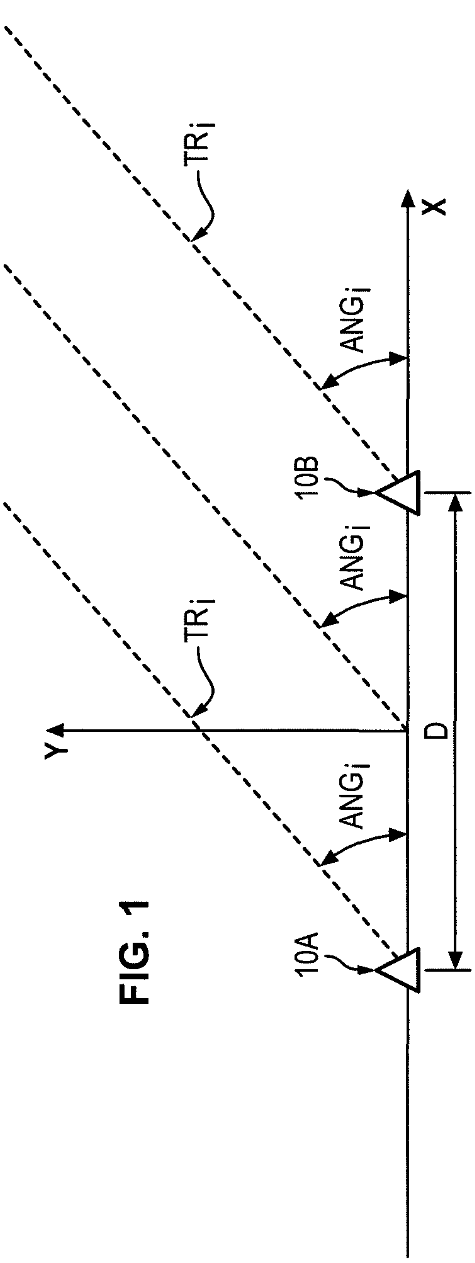
TRi
ANGi
X
Y
D
10A
10B

FIG. 1

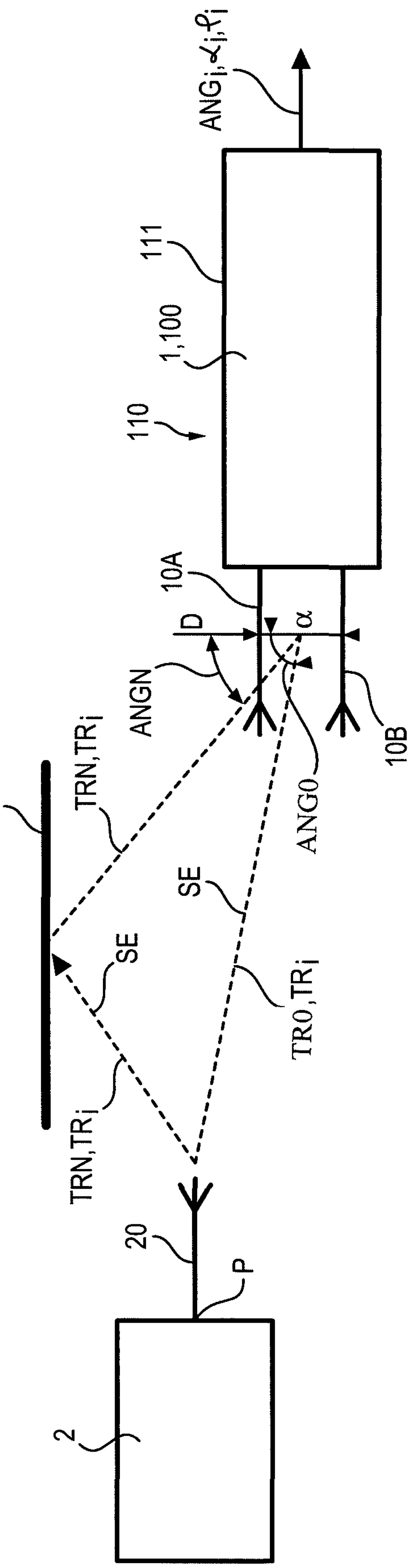
ANGi, αi, ρi
111
1,100
110
10A
D
α
ANGN
ANG0
10B
REF
TRN,TRi
SE
TR0,TRi
20
P
2

FIG. 2

FIG. 3

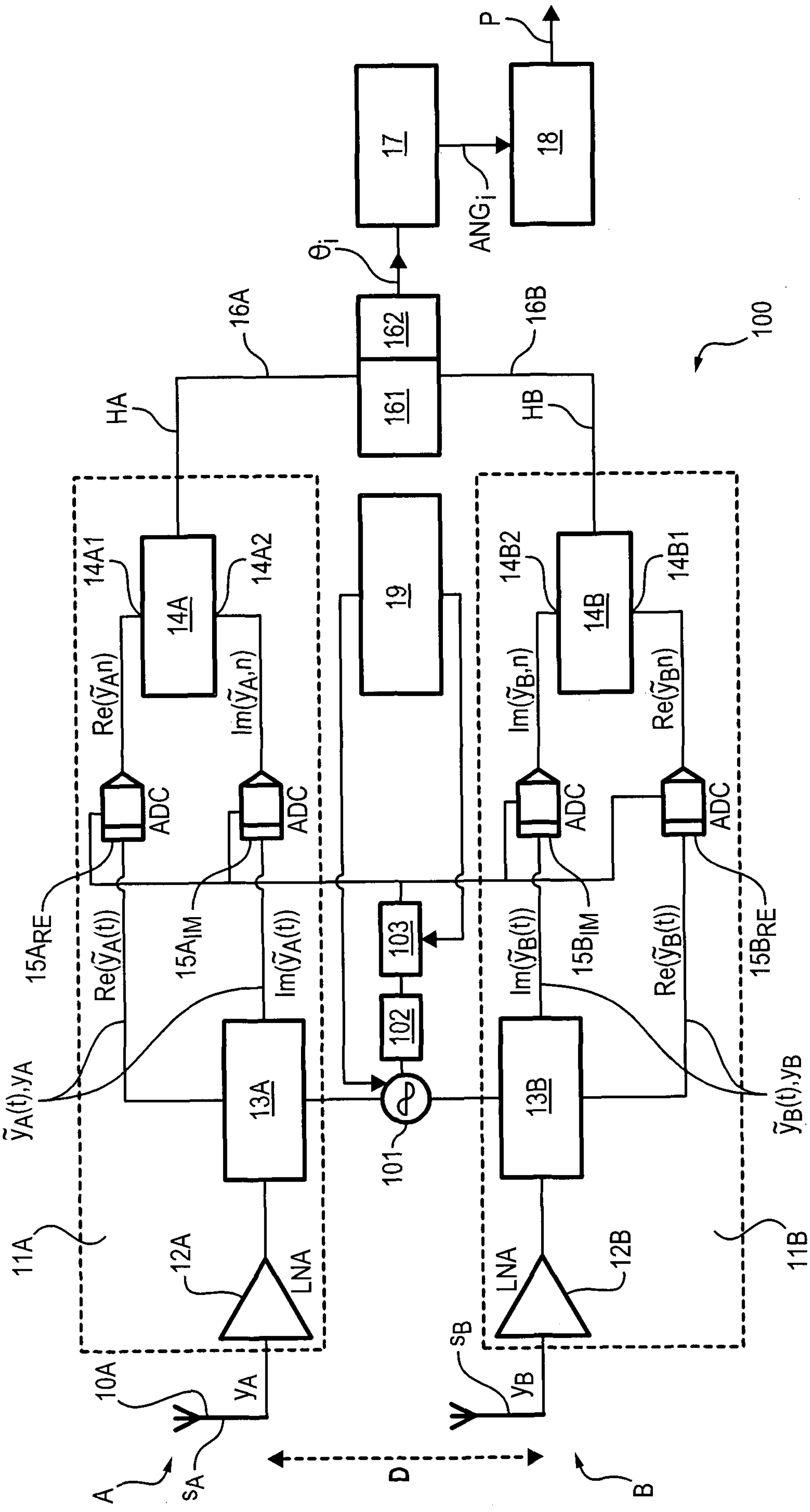
P
17
18
ANG$_i$
$\theta_i$
161
162
16A
16B
HA
HB
100
14A1
14A2
14A
14B2
14B1
14B
19
Re($\tilde{y}_A$n)
Im($\tilde{y}_{A,n}$)
Im($\tilde{y}_{B,n}$)
Re($\tilde{y}_B$n)
ADC
$15A_{RE}$
$15A_{IM}$
$15B_{IM}$
$15B_{RE}$
Re($\tilde{y}_A$(t))
Im($\tilde{y}_A$(t))
Im($\tilde{y}_B$(t))
Re($\tilde{y}_B$(t))
103
102
101
13A
13B
$\tilde{y}_A$(t),yA
$\tilde{y}_B$(t),yB
11A
11B
12A
12B
LNA
10A
yA
yB
sA
sB
A
B
D

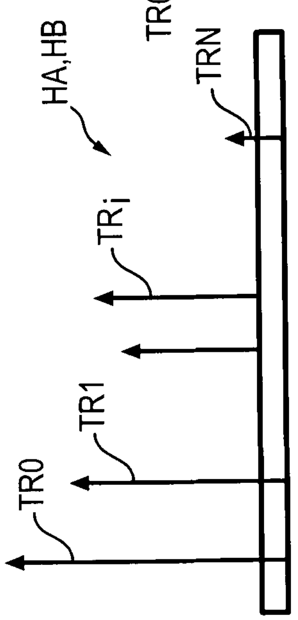


FIG. 4A

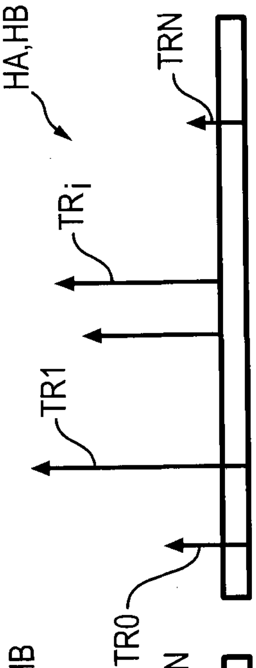


FIG. 4B

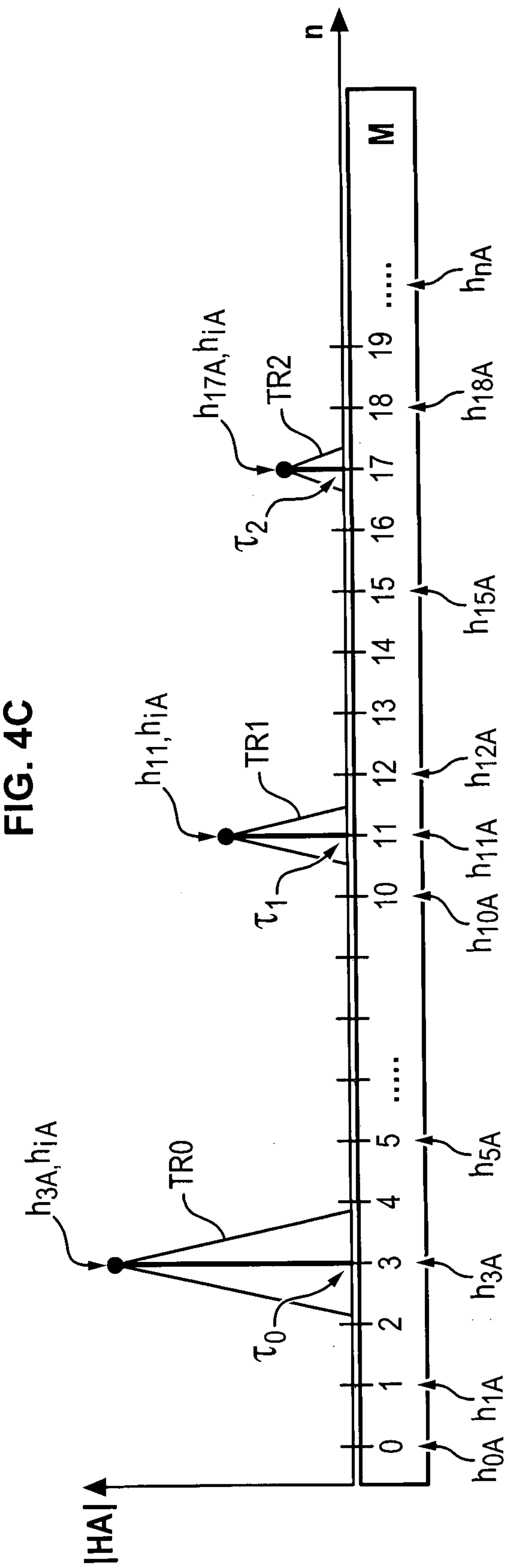


FIG. 4C

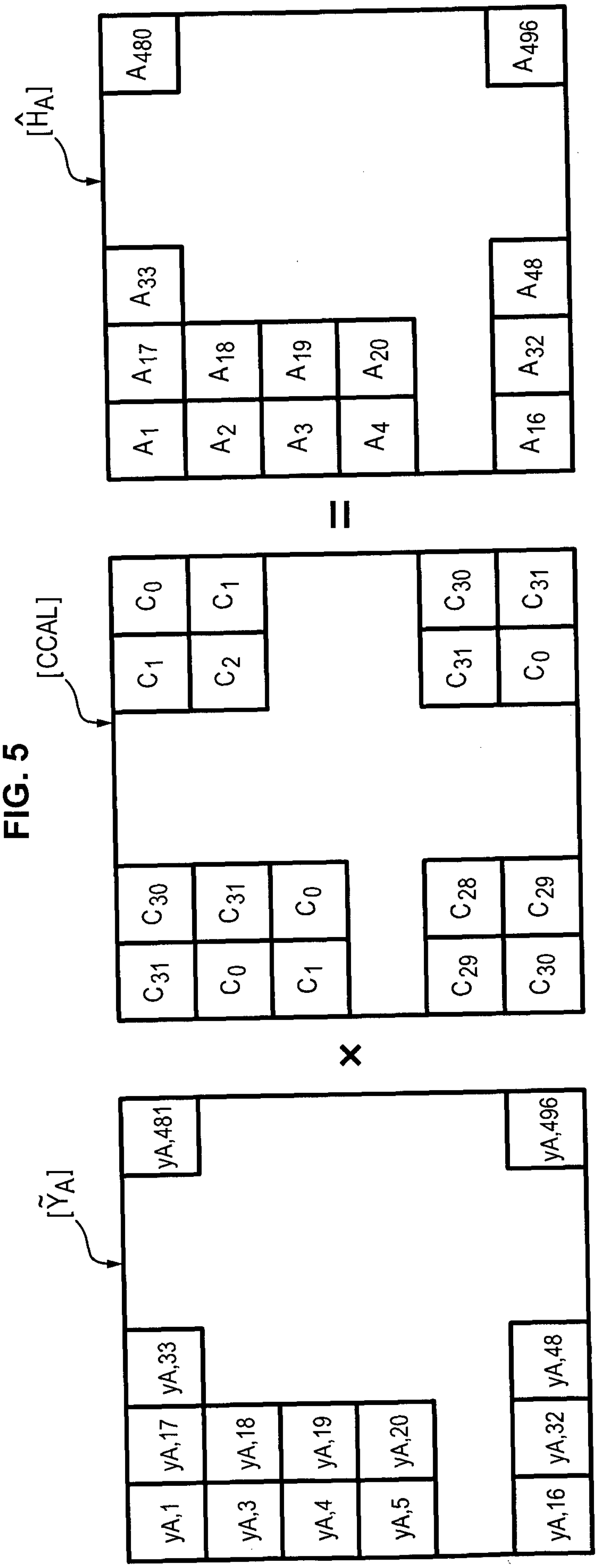
[ĤA]
A1
A2
A3
A4
A16
A17
A18
A19
A20
A32
A33
A48
A480
A496
=
[CCAL]
C0
C1
C2
C28
C29
C30
C31
×
[ỸA]
yA,1
yA,3
yA,4
yA,5
yA,16
yA,17
yA,18
yA,19
yA,20
yA,32
yA,33
yA,48
yA,481
yA,496

FIG. 5

FIG. 6

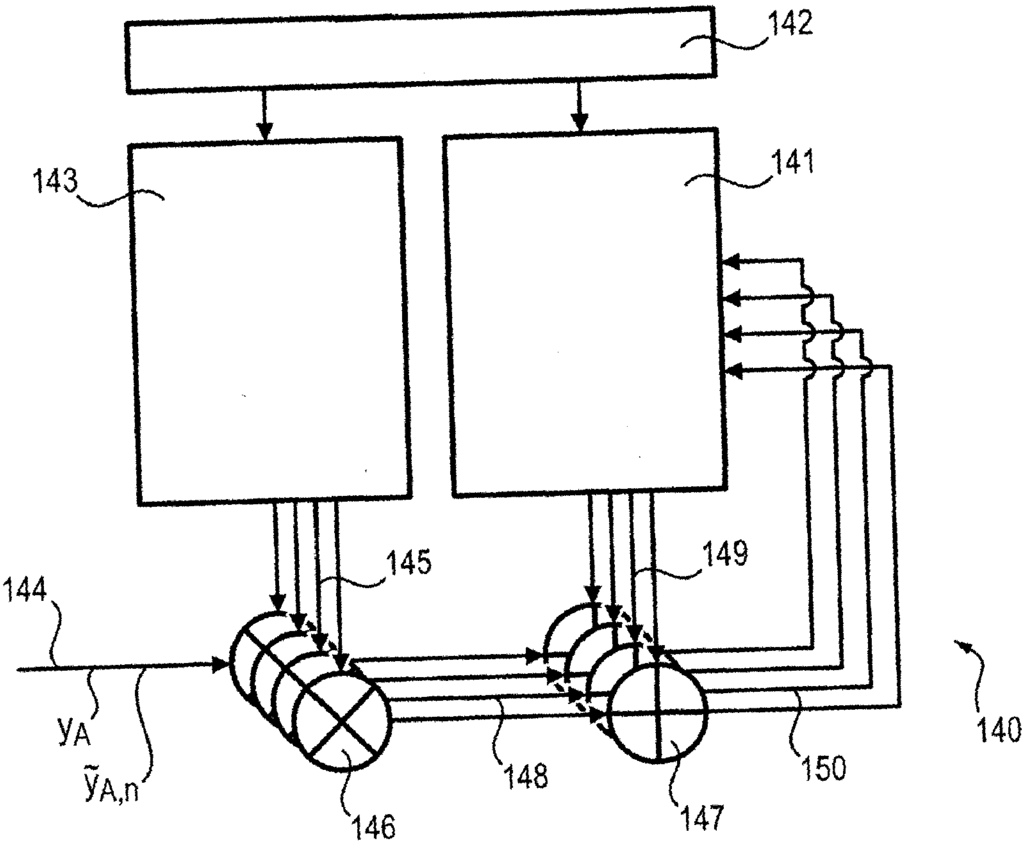
142
143
141
144
145
149
$y_A$
$\tilde{y}_{A,n}$
146
148
147
150
140

FIG. 7

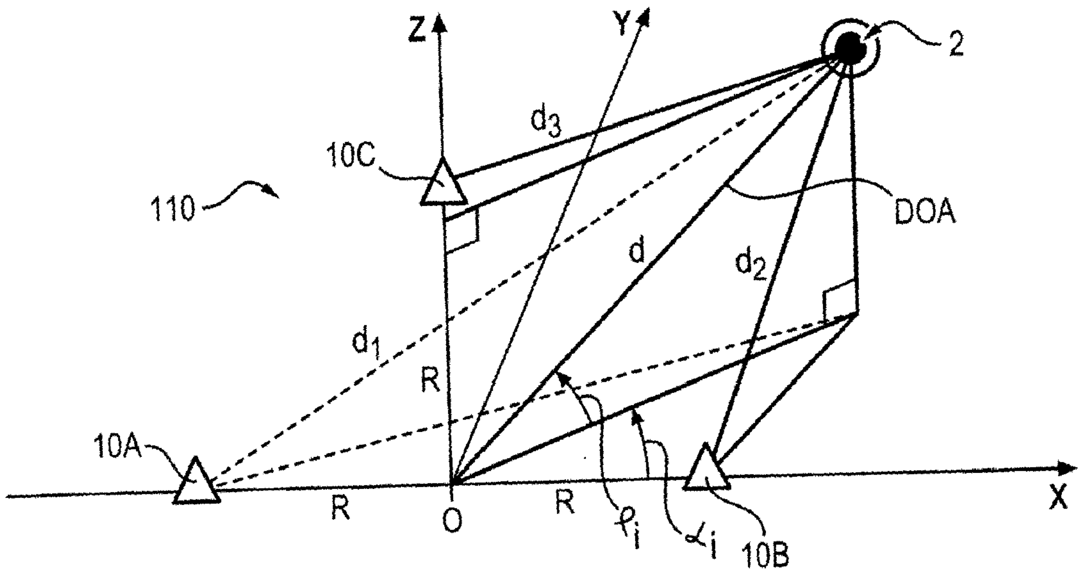
Z
Y
2
$d_3$
10C
110
DOA
d
$d_2$
$d_1$
R
10A
R
O
R
$\rho_i$
$\alpha_i$
10B
X

FIG. 8

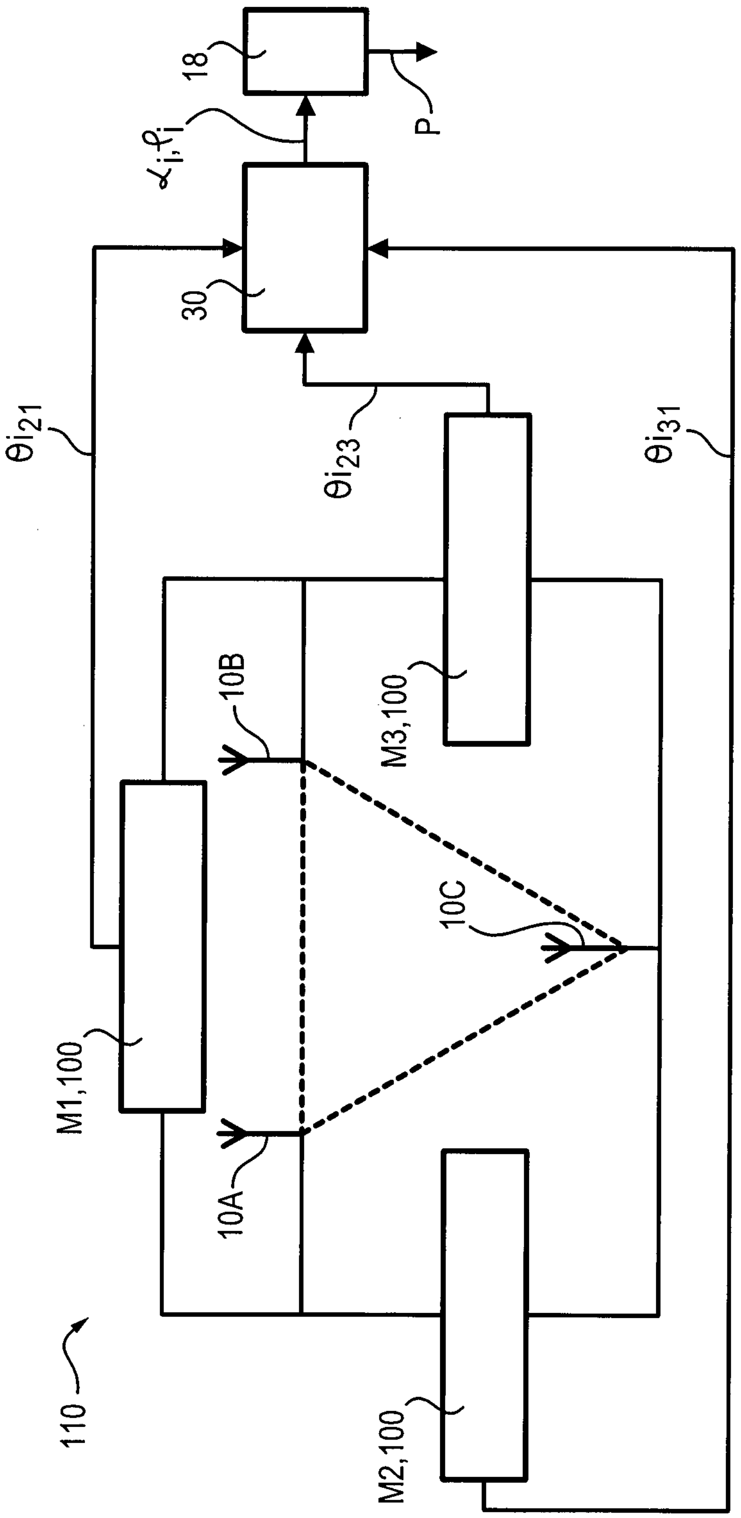
18
P
$\alpha_i, \rho_i$
30
$\theta i_{21}$
$\theta i_{23}$
$\theta i_{31}$
10B
10C
10A
M3,100
M1,100
M2,100
110

FIG. 9

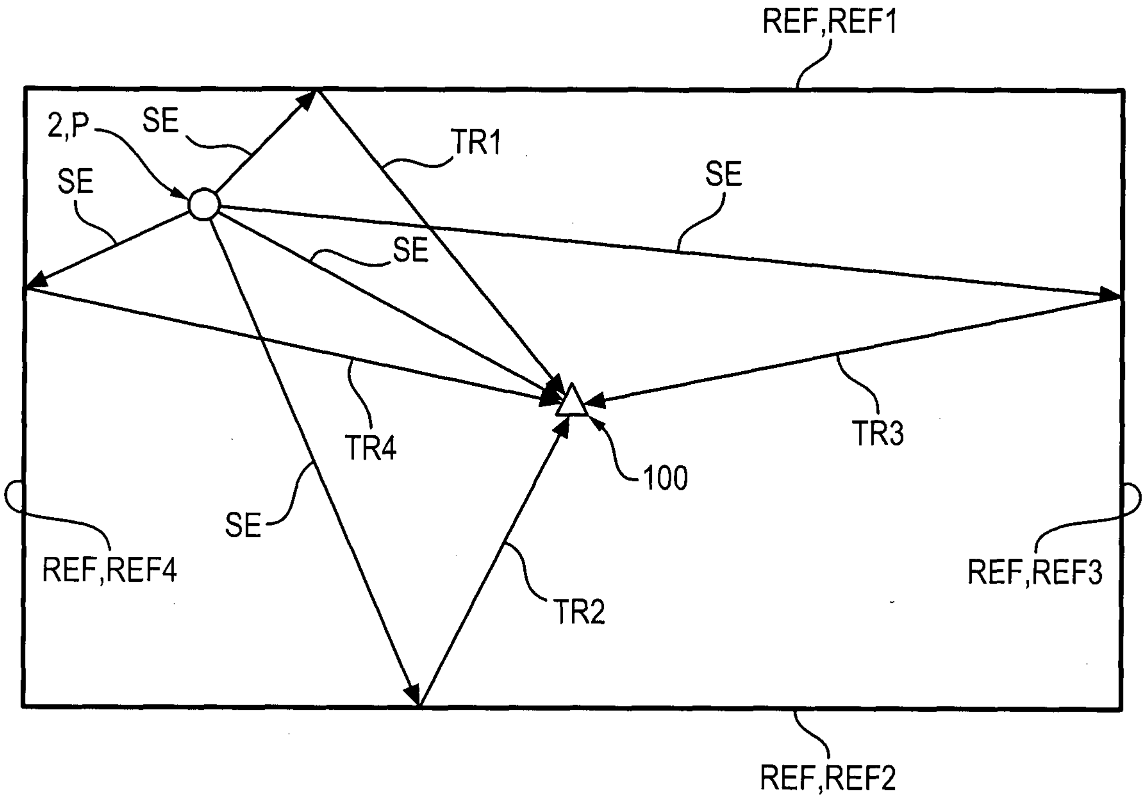
REF,REF1
2,P
SE
SE
TR1
SE
SE
TR4
TR3
100
SE
REF,REF4
REF,REF3
TR2
REF,REF2

FIG. 10

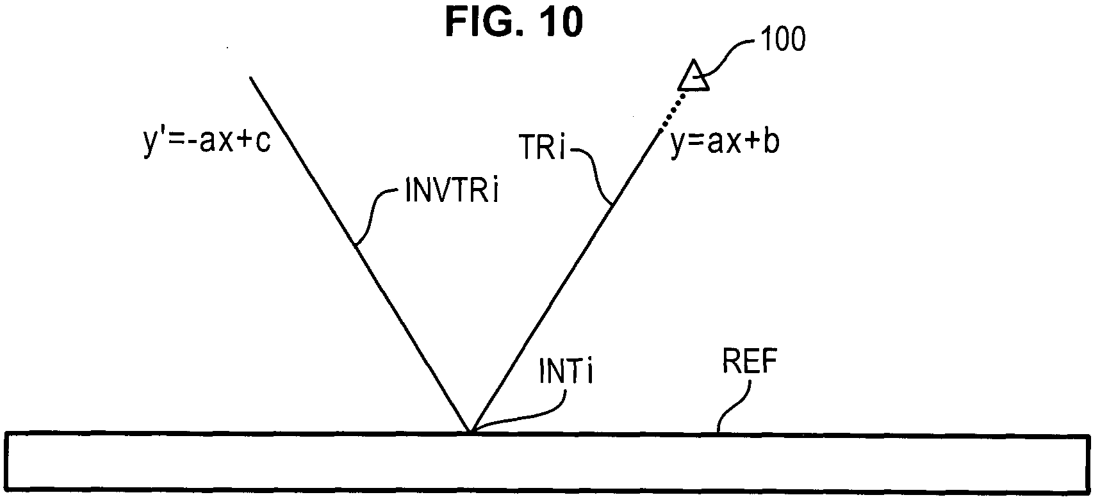
100
y'=-ax+c
TRi
y=ax+b
INVTRi
INTi
REF

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US A20080197982 A1
- US 20100309051 A
- US 20100271263 A
- US 20110090813 A
- US 7474219 B
- US 6760387 B
- EP 1610258 A
- WO 0025147 A